# EUROPÄISCHE PATENTSCHRIFT

(11) **EP 4 029 201 B1**
(45) Veröffentlichungstag und Bekanntmachung des Hinweises auf die Patenterteilung: **08.10.2025**
(21) Anmeldenummer: 20761226.8
(22) Anmeldetag: 24.08.2020
(51) Int. Cl.: H04L 12/40

(54) **EINRICHTUNG FÜR EINE TEILNEHMERSTATION EINES SERIELLEN BUSSYSTEMS UND VERFAHREN ZUR KOMMUNIKATION IN EINEM SERIELLEN BUSSYSTEM**
DEVICE FOR A SUBSCRIBER STATION OF A SERIAL BUS SYSTEM AND METHOD FOR COMMUNICATION IN A SERIAL BUS SYSTEM
DISPOSITIF POUR UNE STATION D'ABONNÉ D'UN SYSTÈME DE BUS SÉRIE ET PROCÉDÉ DE COMMUNICATION DANS UN SYSTÈME DE BUS SÉRIE

(30) Priorität: 12.09.2019 DE 102019213926
(43) Veröffentlichungstag der Anmeldung: 20.07.2022
(73) Patentinhaber: Robert Bosch GmbH, 70442 Stuttgart (DE)
(72) Erfinder: HARTWICH, Florian, 72762 Reutlingen (DE); MUTTER, Arthur, 73765 Neuhausen (DE)
(86) Internationale Anmeldenummer: PCT/EP2020/073598
(87) Internationale Veröffentlichungsnummer: WO 2021/047894

(56) Entgegenhaltungen:
- EP-A2- 3 745 656
- DE-A1- 102016 224 961
- DE-A1- 102018 202 167
- DE-A1- 102018 202 170

## Beschreibung

### Technisches Gebiet

Die vorliegende Erfindung betrifft eine Einrichtung für eine Teilnehmerstation eines seriellen Bussystems und ein Verfahren zur Kommunikation in einem seriellen Bussystem, das mit hoher Datenrate und großer Fehlerrobustheit arbeitet.

### Stand der Technik

Für die Kommunikation zwischen Sensoren und Steuergeräten, beispielsweise in Fahrzeugen, wird häufig ein Bussystem eingesetzt, in welchem Daten als Nachrichten im Standard ISO11898-1:2015 als CAN Protokoll-Spezifikation mit CAN FD übertragen werden. Die Nachrichten werden zwischen den Busteilnehmern des Bussystems, wie Sensor, Steuergerät, Geber, usw., übertragen.

Um Daten mit höherer Bitrate übertragen zu können als bei CAN, ist im CAN FD Nachrichten-Format eine Option zur Umschaltung auf eine höhere Bitrate innerhalb einer Nachricht vorgesehen. Bei solchen Techniken wird die maximal mögliche Datenrate durch Einsatz einer höheren Taktung im Bereich der Datenfelder über einen Wert von 1 MBit/s hinaus gesteigert. Solche Nachrichten werden nachfolgend auch als CAN FD-Rahmen oder CAN FD-Nachrichten bezeichnet.

Geräte für eine Kommunikation mit CAN FD sind derzeit bei Fahrzeugen in der Einführungsphase. Hierbei wird CAN FD von den meisten Herstellern im ersten Schritt mit 2Mbit/s Datenbitrate und 500kbit/s Arbitrationsbitrate im Fahrzeug eingesetzt. Zudem ist bei CAN FD die Nutzdatenlänge von 8 auf bis zu 64 Bytes erweitert und sind die Datenübertragungsraten deutlich höher als bei CAN.

DE 10 2016 224 961 A1 zeigt eine Teilnehmerstation für ein Bussystem und ein Verfahren zur Datenübertragung in einem Bussystem, bei welchem LV-CAN-Nachrichten übertragbar sind, um die Datenrate für die Übertragung auf dem Bus zu steigern. Hierfür können Pegel für die Übertragung der Nachrichten auf dem Bus reduziert werden, um die Bitdauer für die Bits mit reduziertem Pegel in der Nachricht zu verringern.

DE 10 2018 202170 A1 und DE 10 2018 202167 A1 beschreiben jeweils Endstufen zum Senden von Signalen auf einen Bus, die bis zu vier unterschiedlich hohe Buspegel erzeugen können, um die Datenrate im Bereich der Datenfelder für die Übertragung auf dem Bus im Vergleich zu der Arbitrationsbitrate weiter zu steigern.

Für eine noch größere Datenbitrate und Nutzdatenlänge in einer Nachricht, wird derzeit ein Nachfolgebussystem für CAN FD entwickelt, das nachfolgend CAN XL genannt wird. CAN XL soll neben dem reinen Datentransport über den CAN-Bus auch andere Funktionen unterstützen, wie funktionale Sicherheit (Safety), Datensicherheit (Security) und Dienstgüte (QoS = Quality of Service). Dies sind elementare Eigenschaften, die in einem autonom fahrenden Fahrzeug benötigt werden.

Auch CAN XL soll die Vorteile der Arbitration eines CAN oder CAN FD basierten Kommunikationsnetzwerks bieten, gemäß welchem in der Datenphase nur eine Teilnehmerstation einen exklusiven, kollisionsfreien Zugriff auf den Bus des Bussystems hat. Dies bietet im Hinblick auf beispielsweise die Fehlerrobustheit der Kommunikation sehr viele Vorteile. Bei der Arbitration gibt es auf dem Bus rezessive und dominante Buspegel, wobei der dominante Buspegel einen rezessiven Buspegel überschreiben kann. Da der rezessive und dominante Buspegel unterschiedlich stark getrieben werden, verformen sich die Buspegel auf dem Bus asymmetrisch. Folge dessen ist, dass die rezessiven und dominanten Buspegel nur bis zu einer gewissen Schnelligkeit der Datenübertragung für eine robuste Datenübertragung verwendbar sind. Soll also bei CAN XL die Datenbitrate größer bzw. höher, also schneller als bei CAN FD sein, gibt es bei CAN XL in der Datenphase keine rezessiven und dominanten Buspegel mehr. Stattdessen werden in der Datenphase andere Buspegel verwendet, die nachfolgend Data_0 und Data_1 genannt sind. Somit sind für eine Sende-/Empfangseinrichtung (Transceiver) bei CAN XL auch die Betriebsart zur Erzeugung der Buspegel in der Arbitrationsphase und die Betriebsart zur Erzeugung der Buspegel in der Datenphase unterschiedlich. Die Signale hierfür sind beispielsweise in der EP 3 745 656 A2 beschrieben, deren Prioritätsdatum vor dem Prioritätsdatum der vorliegenden Anmeldung liegt jedoch erst danach veröffentlicht wurde.

Dies hat für die Sende-/Empfangseinrichtung (Transceiver) in der CAN XL Datenphase den wesentlichen Nachteil, dass eine in die Datenphase-Betriebsart geschaltete erste Sende-/Empfangseinrichtung des Bussystems nicht sicher die Pegel einer zweiten Sende-/Empfangseinrichtung des Bussystems erkennen kann, die in die Arbitrationsphase-Betriebsart geschaltet ist. Zudem kann auch die in die Arbitrationsphase-Betriebsart geschaltete zweite Sende-/Empfangseinrichtung des Bussystems nicht sicher die Pegel der ersten Sende-/Empfangseinrichtung erkennen, die in die Datenphase-Betriebsart geschaltet ist.

Bei der normalen Kommunikation, wenn alle Teilnehmerstationen des Bussystems ihre Sende-/Empfangseinrichtung (Transceiver), abgesehen von Laufzeiten über den Bus, gleichzeitig umschalten, tritt kein Problem auf. Wird jedoch eine Teilnehmerstation des Bussystems eingeschaltet, während die anderen Teilnehmerstationen mindestens einen CAN XL Rahmen senden, kann die neu hinzukommende Teilnehmerstation nicht eindeutig einen Leerlaufzustand (Idle) am Ende eines Rahmens erkennen. Daher kann sich eine solche Teilnehmerstation nicht richtig integrieren. Dasselbe gilt für eine Teilnehmerstation, die gemäß der ISO11898-1:2015 in einen Protokollausnahmezustand (Protocol-Exception-State) geschaltet ist, um eine Übertragung eines Rahmens in dem Bussystem zu tolerieren, für den die Teilnehmerstation nicht ausgestaltet ist. Außerdem gilt dasselbe für eine Teilnehmerstation, die durch Bitfehler den Anschluss verloren hat. Dies führt zu Fehlern in der Kommunikation und damit zur Senkung der übertragbaren Nettodatenrate.

### Offenbarung der Erfindung

Daher ist es Aufgabe der vorliegenden Erfindung, eine Einrichtung für eine Teilnehmerstation eines seriellen Bussystems und ein Verfahren zur Kommunikation in einem seriellen Bussystem bereitzustellen, welche die zuvor genannten Probleme lösen. Insbesondere sollen eine Einrichtung für eine Teilnehmerstation eines seriellen Bussystems und ein Verfahren zur Kommunikation in einem seriellen Bussystem bereitgestellt werden, bei welchen bei großer Flexibilität im Betrieb einer technischen Anlage, in welcher das Bussystem zur Kommunikation eingesetzt wird, und mit großer Fehlerrobustheit der Kommunikation eine hohe Datenrate und eine Steigerung der Menge der Nutzdaten pro Rahmen realisiert werden kann.

Die Aufgabe wird durch eine Einrichtung für eine Teilnehmerstation eines seriellen Bussystems mit den Merkmalen von Anspruch 1 gelöst. Die Einrichtung hat einen Empfangsblock zum Empfang eines Signals von einem Bus des Bussystems, wobei das Signal auf einem Sendesignal basiert, mit welchem eine Nachricht zwischen Teilnehmerstationen des Bussystems ausgetauscht wird, und wobei der Empfangsblock ausgestaltet ist, das Signal in einer ersten Kommunikationsphase, in der in dem Signal ein rezessiver Buszustand von einem dominanten Buszustand überschreibbar ist, mit einer ersten Empfangsschwelle zu empfangen, und das Signal in einer zweiten Kommunikationsphase, in der in dem Signal andere Buszustände als die rezessiven und dominanten Buszustände vorhanden sind, mit einer zweiten Empfangsschwelle zu empfangen, einem Auswerteblock zum Auswerten des Signals von dem Bus des Bussystems mit einer Umschalt-Empfangsschwelle, die sich von der ersten Empfangsschwelle und der zweiten Empfangsschwelle unterscheidet, und einem Empfangsschwellenschaltblock zum zeitlich befristeten Umschalten der Empfangsschwelle des Empfangsblocks von der ersten Empfangsschwelle auf die zweite Empfangsschwelle, wenn der Auswerteblock mit der Umschalt-Empfangsschwelle in dem Signal den Buspegel für Data_1 des Sendesignals erkennt, wie in Anspruch 1 beschrieben.

Aufgrund der Ausgestaltung der Einrichtung kann sich eine Teilnehmerstation des Bussystems, die eingeschaltet wird, während die anderen Teilnehmerstationen CAN XL Rahmen senden, automatisch in eine laufende Kommunikation integrieren. Die Einrichtung kann eindeutig den Leerlaufzustand (Idle) erkennen, so dass die Teilnehmerstation problemlos richtig in die Kommunikation integrierbar ist. Hierbei kann die Einrichtung die Teilnehmerstation automatisch in die Betriebsart schalten, die für den derzeit auf dem Bus vorliegenden Betriebszustand korrekt ist. Dadurch kann die Teilnehmerstation den aktuellen Buspegel korrekt erkennen.

Der Vorteil der beschriebenen Einrichtung ist, dass sich eine Sende-/Empfangseinrichtung der Teilnehmerstation automatisch auf die korrekte Empfangsschwelle anhand einer einfach zu erkennenden Umschalt-Bedingung einstellt, die wenig Aufwand in der Hardware benötigt.

Dieselben Vorteile bietet die beschriebene Einrichtung für Teilnehmerstationen, die gemäß der ISO11898-1:2015 in den Protokollausnahmezustand (Protocol-Exception-State) geschaltet sind oder durch Bitfehler den Anschluss verloren haben.

Damit ist es möglich, ohne Verlust der Robustheit des Bussystems in der Datenphase die beiden Buszustände in einem Rahmen in der Datenphase aktiv zu treiben. Somit trägt die Einrichtung wesentlich mit dazu bei, dass die Nettodatenrate im Bussystem erhöht werden kann.

Dadurch verhindert die beschriebene Einrichtung, dass die Teilnehmerstation des Bussystems die Sendung einer beliebigen anderen Teilnehmerstation mit einem Fehlerrahmen nur deshalb stört bzw. unterbricht, weil die Integration in die laufende Kommunikation fehlgeschlagen ist.

Als Folge davon kann mit der Einrichtung, die insbesondere ein Empfangsblock oder eine Sende-/Empfangseinrichtung ist, auch bei Steigerung der Menge der Nutzdaten pro Rahmen ein Empfang der Rahmen mit geringer Fehlerquote gewährleistet werden. Somit kann in dem seriellen Bussystem auch mit großer Fehlerrobustheit kommuniziert werden, wenn eine hohe Datenrate und eine Steigerung der Menge der Nutzdaten pro Rahmen erfolgt.

Daher ist es mit der Einrichtung in dem Bussystem insbesondere möglich, in einer ersten Kommunikationsphase eine von CAN bekannte Arbitration beizubehalten und dennoch die Übertragungsrate gegenüber CAN oder CAN FD nochmals beträchtlich zu steigern.

Dies trägt mit dazu bei, eine Nettodatenrate von mindestens 5 Mbit/s bis etwa 8 Mbit/s oder 10 Mbit/s oder höher zu realisieren. In dem Fall einer Übertragungsgeschwindigkeit von 10Mbit/s ist ein Bit weniger als 100 ns lang.

Noch dazu kann die Größe der Nutzdaten in dem Bussystem bis zu 4096 Byte pro Rahmen betragen.

Das von der Einrichtung durchgeführte Verfahren kann auch zum Einsatz kommen, wenn in dem Bussystem auch mindestens eine CAN FD tolerante CAN-Teilnehmerstation, die gemäß dem Standard der ISO 11898-1:2015 ausgestaltet ist, und/oder mindestens eine CAN FD Teilnehmerstation vorhanden ist, die Nachrichten nach dem CAN-Protokoll und/oder CAN FD Protokoll senden.

Vorteilhafte weitere Ausgestaltungen der Einrichtung sind in den abhängigen Ansprüchen angegeben.

Gemäß einem Ausführungsbeispiel ist der Empfangsschwellenschaltblock ausgestaltet, für das zeitlich befristete Umschalten der Empfangsschwelle des Empfangsblocks von der ersten Empfangsschwelle auf die zweite Empfangsschwelle den Empfangsblock in eine Betriebsart zu schalten, die sich von drei anderen Betriebsarten der Einrichtung unterscheidet, wobei die drei anderen Betriebsarten der Einrichtung aufweisen: eine erste Betriebsart zum Senden und/oder Empfangen des Signals in der ersten Kommunikationsphase, eine zweite Betriebsart nur zum Empfangen des Signals in der zweiten Kommunikationsphase, und eine dritte Betriebsart zum Senden und Empfangen des Signals in der zweiten Kommunikationsphase.

Gemäß einem Ausführungsbeispiel ist der Empfangsschwellenschaltblock ausgestaltet, das zeitlich befristete Umschalten der Empfangsschwelle des Empfangsblocks von der ersten Empfangsschwelle auf die zweite Empfangsschwelle in einer ersten Betriebsart vorzunehmen, in der das Empfangen des Signals in der ersten Kommunikationsphase durchgeführt wird.

Denkbar ist, dass der Auswerteblock ein Komparator ist, der einen Eingang zum Anschluss an zwei Busleitungen des Busses aufweist, und dessen Ausgang an den Empfangsschwellenschaltblock angeschlossen ist.

Möglicherweise ist der Auswerteblock ausgestaltet zu prüfen, ob die Umschalt-Empfangsschwelle von einem Buspegel für Data_1 des Sendesignals in dem Signal unterschritten wird. Hierbei kann die Umschalt-Empfangsschwelle eine Empfangsschwelle mit einem negativen Zahlenwert sein.

Bei der zuvor beschriebenen Einrichtung sind die Buszustände des in der ersten Kommunikationsphase von dem Bus empfangenen Signals mit einem anderen Physical Layer erzeugt als die Buszustände des in der zweiten Kommunikationsphase empfangenen Signals.

Gemäß einer weiteren speziellen Ausführungsvariante haben die Buszustände des in der ersten Kommunikationsphase von dem Bus empfangenen Signals eine längere Bitzeit als die Buszustände des in der zweiten Kommunikationsphase empfangenen Signals.

Möglicherweise wird in der ersten Kommunikationsphase ausgehandelt, welche der Teilnehmerstationen des Bussystems in der nachfolgenden zweiten Kommunikationsphase einen zumindest zeitweise exklusiven, kollisionsfreien Zugriff auf den Bus bekommt.

Die Einrichtung kann zudem einen Sendeblock zum Senden von Nachrichten auf einen Bus des Bussystems haben, wobei der Sendeblock beim Senden der verschiedenen Kommunikationsphasen einer Nachricht ausgestaltet ist, zwischen einer Sendebetriebsart für die erste Kommunikationsphase und einer Sendebetriebsart für die zweite Kommunikationsphase zu schalten.

Die zuvor beschriebene Einrichtung kann Teil einer Teilnehmerstation für ein serielles Bussystem sein, die zudem eine Kommunikationssteuereinrichtung zum Steuern einer Kommunikation der Teilnehmerstation mit mindestens einer anderen Teilnehmerstation des Bussystems aufweist.

Hierbei besteht die Option, dass die Kommunikationssteuereinrichtung ausgestaltet ist, die Einrichtung in eine Betriebsart zum Senden und/oder Empfangen des Signals in der ersten Kommunikationsphase zu schalten, wenn die Kommunikationssteuereinrichtung einen Leerlaufzustand auf dem Bus erkannt hat.

Die zuvor beschriebene Teilnehmerstation kann Teil eines Bussystems sein, das zudem einen Bus und mindestens zwei Teilnehmerstationen umfasst, welche über den Bus derart miteinander verbunden sind, dass sie seriell miteinander kommunizieren können. Hierbei ist mindestens eine der mindestens zwei Teilnehmerstationen eine zuvor beschriebene Teilnehmerstation.

Die zuvor genannte Aufgabe wird zudem durch ein Verfahren zur Kommunikation in einem seriellen Bussystem nach Anspruch 13 gelöst. Das Verfahren wird mit einer Einrichtung ausgeführt, die einen Empfangsblock zum Empfang eines Signals von einem Bus des Bussystems, einen Auswerteblock und einen Empfangsschwellenschaltblock aufweist, wobei die Einrichtung die Schritte ausführt, Empfangen, mit dem Empfangsblock eines Signals von dem Bus, das auf einem Sendesignal basiert, mit welchem eine Nachricht zwischen Teilnehmerstationen des Bussystems ausgetauscht wird, wobei der Empfangsblock ausgestaltet ist, das Signal in einer ersten Kommunikationsphase, in der in dem Signal ein rezessiver Buszustand von einem dominanten Buszustand überschreibbar ist, mit einer ersten Empfangsschwelle zu empfangen, und das Signal in einer zweiten Kommunikationsphase, in der in dem Signal andere Buszustände als die rezessiven und dominanten Buszustände vorhanden sind, mit einer zweiten Empfangsschwelle zu empfangen, Auswerten, mit dem Auswerteblock, des Signals von dem Bus des Bussystems mit einer Umschalt-Empfangsschwelle, die sich von der ersten Empfangsschwelle und der zweiten Empfangsschwelle unterscheidet, und Befristetes Umschalten, mit dem Empfangsschwellenschaltblock, der Empfangsschwelle des Empfangsblocks von der ersten Empfangsschwelle auf die zweite Empfangsschwelle, wenn der Auswerteblock mit der Umschalt-Empfangsschwelle in dem Signal den Buspegel für Data_1 des Sendesignals erkennt, wie in Anspruch 13 beschrieben.

Das Verfahren bietet dieselben Vorteile, wie sie zuvor in Bezug auf die Einrichtung und/oder die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 ein Schaubild zur Veranschaulichung des Aufbaus von Nachrichten, die von einer Sende-/Empfangseinrichtung für eine Teilnehmerstationen des Bussystems gemäß dem ersten Ausführungsbeispiel gesendet werden können;
Fig. 3 ein vereinfachtes schematisches Blockschaltbild einer Teilnehmerstation des Bussystems gemäß dem ersten Ausführungsbeispiel;
Fig. 4 einen zeitlichen Verlauf von Bussignalen CAN-XL_H und CAN-XL_L in der Arbitrationsphase auf einem Bus des Bussystems gemäß dem ersten Ausführungsbeispiel;
Fig. 5 einen zeitlichen Verlauf einer Differenzspannung VDIFF, die aus den Bussignalen CAN-XL_H und CAN-XL_L von Fig. 4 resultiert;
Fig. 6 einen zeitlichen Verlauf von Bussignalen CAN-XL_H und CAN-XL_L in der Datenphase auf einem Bus des Bussystems gemäß dem ersten Ausführungsbeispiel;
Fig. 7 einen zeitlichen Verlauf einer Differenzspannung VDIFF, die aus den Bussignalen CAN-XL_H und CAN-XL_L von Fig. 6 resultiert;
Fig. 8 einen zeitlichen Verlauf einer Differenzspannung VDIFF, die sich aufgrund der Bussignale CAN-XL_H und CAN-XL_L für jeweils einen Ausschnitt aus der Arbitrationsphase und aus der Datenphase gemäß dem ersten Ausführungsbeispiel einstellt;
Fig. 9 ein Zustandsdiagramm für die Betriebszustände der Sende-/Empfangseinrichtung gemäß dem ersten Ausführungsbeispiel; und
Fig. 10 ein Zustandsdiagramm für die Betriebszustände der Sende-/Empfangseinrichtung gemäß einem zweiten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

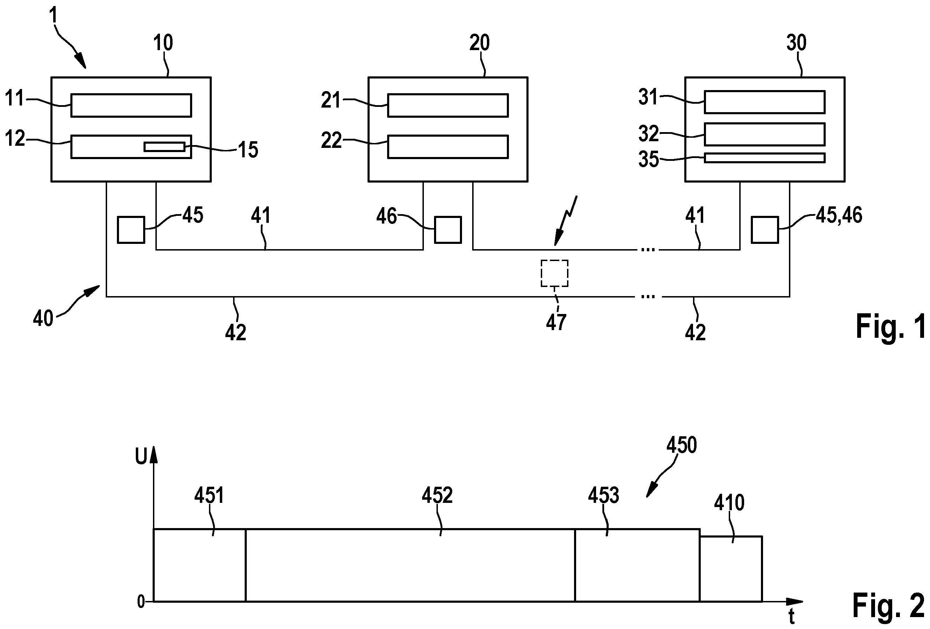

Fig. 1 zeigt als Beispiel ein Bussystem 1, das insbesondere grundlegend für ein CAN-Bussystem, ein CAN FD-Bussystem, ein CAN XL-Bussystem, und/oder Abwandlungen davon, ausgestaltet ist, wie nachfolgend beschrieben. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 können auch CAN_H und CAN_L oder CAN-XL_H und CAN-XL_L genannt werden und dienen zur elektrischen Signalübertragung nach Einkopplung der Differenzpegel oder dominanten Pegel bzw. Erzeugung von rezessiven Pegeln für ein Signal im Sendezustand.

Über den Bus 40 sind Nachrichten 45, 46 in der Form von Signalen zwischen den einzelnen Teilnehmerstationen 10, 20, 30 seriell übertragbar. Die Teilnehmerstationen 10, 20, 30 sind beispielsweise Steuergeräte, Sensoren, Anzeigevorrichtungen, usw. eines Kraftfahrzeugs.

Tritt bei der Kommunikation auf dem Bus 40 ein Fehler auf, wie durch den gezackten schwarzen Blockpfeil in Fig. 1 dargestellt, kann ein Fehlerrahmen 47 (Error Flag) gesendet werden. Der Fehlerrahmen 47 besteht aus sechs dominanten Bits. Alle anderen Teilnehmerstationen 10, 20, 30 erkennen diese sechs aufeinanderfolgenden dominanten Bits als einen Format-Fehler oder als Verstoß gegen die Bit-Stuffing-Regel, die vorschreibt, dass in einer Nachricht 45, 46 nach fünf gleichen Bits ein dazu inverses Bit eingefügt werden muss.

Eine fehlerfreie Nachricht 45, 46 wird von den Empfängern durch ein Acknowledge-Bit bestätigt, das ein dominantes Bit ist, das in einem vom Sender rezessiv gesendeten Acknowledge-Zeitschlitz getrieben wird. Bis auf den Acknowledge- Zeitschlitz erwartet der Sender einer Nachricht 45, 46, dass er auf dem Bus 40 immer den Pegel sieht, der er selbst sendet. Andernfalls erkennt der Sender einen Bitfehler und betrachtet die Nachricht 45, 46 als ungültig. Nicht erfolgreiche Nachrichten 45, 46 werden wiederholt.

Wie in Fig. 1 gezeigt, hat die Teilnehmerstation 10 eine Kommunikationssteuereinrichtung 11, eine Sende-/Empfangseinrichtung 12 und eine Betriebsart-Einstelleinrichtung 15. Die Teilnehmerstation 20 hat dagegen eine Kommunikationssteuereinrichtung 21 und eine Sende-/Empfangseinrichtung 22. Die Teilnehmerstation 30 hat eine Kommunikationssteuereinrichtung 31, eine Sende-/Empfangseinrichtung 32 und eine Betriebsart-Einstelleinrichtung 35. Die Sende-/Empfangseinrichtungen 12, 22, 32 der Teilnehmerstationen 10, 20, 30 sind jeweils direkt an den Bus 40 angeschlossen, auch wenn dies in Fig. 1 nicht veranschaulicht ist.

Die Kommunikationssteuereinrichtungen 11, 21, 31 dienen jeweils zur Steuerung einer Kommunikation der jeweiligen Teilnehmerstation 10, 20, 30 über den Bus 40 mit mindestens einer anderen Teilnehmerstation der Teilnehmerstationen 10, 20, 30, die an den Bus 40 angeschlossen sind.

Die Kommunikationssteuereinrichtung 11 erstellt und liest erste Nachrichten 45, die beispielsweise modifizierte CAN Nachrichten 45 sind. Hierbei sind die modifizierten CAN Nachrichten 45 auf der Grundlage eines CAN XL-Formats aufgebaut, das in Bezug auf Fig. 2 detaillierter beschrieben ist.

Die Kommunikationssteuereinrichtung 21 kann wie ein herkömmlicher CAN-Controller nach ISO 11898-1:2015 ausgeführt sein. Die Kommunikationssteuereinrichtung 21 erstellt und liest zweite Nachrichten 46, beispielsweise Classical CAN-Nachrichten 46. Die Classical CAN-Nachrichten 46 sind gemäß dem Classical Basisformat aufgebaut, bei welchem in der Nachricht 46 eine Anzahl von bis zu 8 Datenbytes umfasst sein können. Alternativ ist die Classical CAN-Nachricht 46 als CAN FD Nachricht aufgebaut, bei welcher eine Anzahl von bis zu 64 Datenbytes umfasst sein können, die noch dazu mit einer deutlich schnelleren Datenrate als bei der Classical CAN-Nachricht 46 übertragen werden. Im letzteren Fall ist die Kommunikationssteuereinrichtung 21 wie ein herkömmlicher CAN FD-Controller ausgeführt.

Die Kommunikationssteuereinrichtung 31 kann ausgeführt sein, um je nach Bedarf eine CAN XL-Nachricht 45 oder eine Classical CAN-Nachricht 46 für die Sende-/Empfangseinrichtung 32 bereitzustellen oder von dieser zu empfangen. Die Kommunikationssteuereinrichtung 31 erstellt und liest also eine erste Nachricht 45 oder zweite Nachricht 46, wobei sich die erste und zweite Nachricht 44, 46 durch ihren Datenübertragungsstandard unterscheiden, nämlich in diesem Fall CAN XL oder CAN. Alternativ ist die Classical CAN-Nachricht 46 als CAN FD Nachricht aufgebaut. Im letzteren Fall ist die Kommunikationssteuereinrichtung 31 wie ein herkömmlicher CAN FD-Controller ausgeführt.

Die Sende-/Empfangseinrichtung 12 kann bis auf die nachfolgend noch genauer beschriebenen Unterschiede als CAN XL-Transceiver ausgeführt sein. Die Sende-/Empfangseinrichtung 22 kann wie ein herkömmlicher CAN Transceiver oder CAN FD Transceiver ausgeführt sein. Die Sende-/Empfangseinrichtung 32 kann ausgeführt sein, um je nach Bedarf Nachrichten 45 gemäß dem CAN XL-Format oder Nachrichten 46 gemäß dem derzeitigen CAN-Basisformat für die Kommunikationssteuereinrichtung 31 bereitzustellen oder von dieser zu empfangen. Die Sende-/Empfangseinrichtungen 12, 32 sind zusätzlich oder alternativ wie ein herkömmlicher CAN FD Transceiver ausführbar.

Mit den beiden Teilnehmerstationen 10, 30 ist eine Bildung und dann Übertragung von Nachrichten 45 mit dem CAN XL Format sowie der Empfang solcher Nachrichten 45 realisierbar.

Fig. 2 zeigt für die Nachricht 45 einen CAN XL Rahmen 450, wie er von der Sende-/Empfangseinrichtung 12 oder der Sende-/Empfangseinrichtung 32 gesendet wird. Der CAN XL-Rahmen 450 ist für die CAN-Kommunikation auf dem Bus 40 in unterschiedliche Kommunikationsphasen 451 bis 453 unterteilt, nämlich eine Arbitrationsphase 451, eine Datenphase 452 und eine Rahmenendphase 453. Zwischen zwei verschiedenen Rahmen 450 kann ein Leerlauf- oder Bereitschaftszustand (Idle oder Standby) 410 auf dem Bus 40 auftreten, in dem keine der Teilnehmerstationen 10, 20, 30 etwas auf den Bus 40 sendet. Der Leerlauf- oder Bereitschaftszustand (Idle oder Standby) 410 ist nachfolgend kurz als Leerlaufzustand 410 bezeichnet.

In der Arbitrationsphase 451 wird mit Hilfe eines Identifizierers bitweise zwischen den Teilnehmerstationen 10, 20, 30 ausgehandelt, welche Teilnehmerstation 10, 20, 30 die Nachricht 45, 46 mit der höchsten Priorität senden möchte und daher für die nächste Zeit zum Senden in der anschließenden Datenphase 452 einen exklusiven Zugriff auf den Bus 40 des Bussystems 1 bekommt.

In der Datenphase 452 werden die Nutzdaten des CAN-XL-Rahmens bzw. der Nachricht 45 gesendet. Die Nutzdaten können entsprechend dem Wertebereich eines Datenlängecodes beispielsweise bis zu 4096 Bytes oder einen größeren Wert aufweisen. In der Datenphase 452 ist im Normalbetrieb nur eine der Teilnehmerstationen 10, 20, 30 Sender eines Rahmens 450, wie zuvor beschrieben. Daher sind alle anderen Teilnehmerstationen 10, 20, 30 Empfänger des Rahmens 450 und daher in eine Empfangsbetriebsart geschaltet.

In der Rahmenendphase 453 kann beispielsweise in einem Prüfsummenfeld eine Prüfsumme über die Daten der Datenphase 452 einschließlich der Stuffbits enthalten sein, die vom Sendeblock der Nachricht 45 nach jeweils einer vorbestimmten Anzahl von gleichen Bits, insbesondere 10 oder einer anderen Anzahl von gleichen Bits, als inverses Bit eingefügt werden. Zudem kann in einem Endefeld in der Rahmenendphase 453 mindestens ein Acknowledge-Bit enthalten sein. Außerdem kann eine Folge von 11 gleichen Bits vorhanden sein, welche das Ende des CAN XL Rahmens 450 anzeigen. Mit dem mindestens einen Acknowledge-Bit kann mitgeteilt werden, ob ein Empfangsblock in dem empfangenen CAN XL Rahmen 450 bzw. der Nachricht 45 einen Fehler entdeckt hat oder nicht, wie bereits zuvor erwähnt.

In der Arbitrationsphase 451 und der Rahmenendphase 453 wird ein Physical Layer wie bei CAN und CAN-FD verwendet. Der Physical Layer entspricht der Bitübertragungsschicht oder Schicht 1 des bekannten OSI-Modells (Open Systems Interconnection Modell).

Ein wichtiger Punkt während der Phasen 451, 453 ist, dass das bekannte CSMA/CR-Verfahren Verwendung findet, welches gleichzeitigen Zugriff der Teilnehmerstationen 10, 20, 30 auf den Bus 40 erlaubt, ohne dass die höher priorisierte Nachricht 45, 46 zerstört wird. Dadurch können dem Bussystem 1 relativ einfach weitere Bus-Teilnehmerstationen 10, 20, 30 hinzugefügt werden, was sehr vorteilhaft ist.

Das CSMA/CR-Verfahren hat zur Folge, dass es sogenannte rezessive Zustände auf dem Bus 40 geben muss, welche von anderen Teilnehmerstationen 10, 20, 30 mit dominanten Zuständen auf dem Bus 40 überschrieben werden können. Im rezessiven Zustand herrschen an der einzelnen Teilnehmerstation 10, 20, 30 hochohmige Verhältnisse, was in Kombination mit den Parasiten der Busbeschaltung längere Zeitkonstanten zur Folge hat. Dies führt zu einer Begrenzung der maximalen Bitrate des heutigen CAN-FD-Physical-Layer auf derzeit etwa 2 Megabit pro Sekunde im realen Fahrzeug-Einsatz.

Ein Sendeblock der Nachricht 45 beginnt ein Senden von Bits der Datenphase 452 auf den Bus 40 erst, wenn die Teilnehmerstation 10 als der Sendeblock die Arbitration gewonnen hat und die Teilnehmerstation 10 als Sendeblock damit zum Senden einen exklusiven Zugriff auf den Bus 40 des Bussystems 1 hat.

Ganz allgemein können in dem Bussystem mit CAN XL im Vergleich zu CAN oder CAN FD folgende abweichenden Eigenschaften realisiert werden:
a) Übernahme und ggf. Anpassung bewährter Eigenschaften, die für die Robustheit und Anwenderfreundlichkeit von CAN und CAN FD verantwortlich sind, insbesondere Rahmenstruktur mit Identifier und Arbitrierung nach dem CSMA/CR-Verfahren,
b) Steigerung der Netto-Datenübertragungsrate auf etwa 10 Megabit pro Sekunde,
c) Anheben der Größe der Nutzdaten pro Rahmen auf etwa 4kbyte.

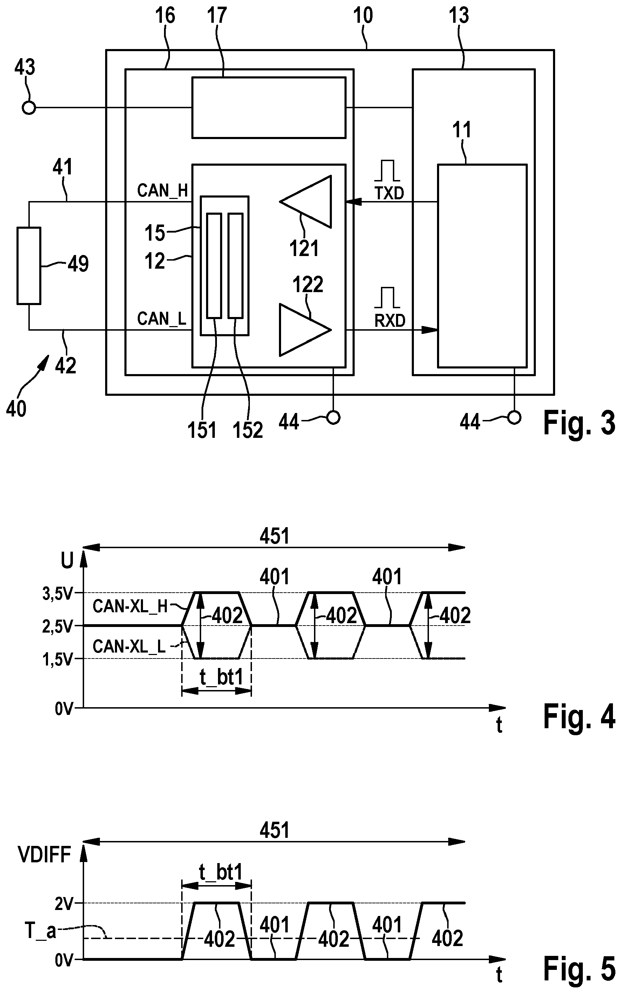

Fig. 3 zeigt den grundlegenden Aufbau der Teilnehmerstation 10 mit der Kommunikationssteuereinrichtung 11, der Sende-/Empfangseinrichtung 12 und der Betriebsart-Einstelleinrichtung 15. Die Betriebsart-Einstelleinrichtung 15 hat einen Auswerteblock 151 und einen Empfangsschwellenschaltblock 152.

Die Teilnehmerstation 30 ist in ähnlicher Weise aufgebaut, wie in Fig. 3 gezeigt, außer dass die Betriebsart-Einstelleinrichtung 35 nicht in die Sende-/ Empfangseinrichtung 32 integriert ist, sondern separat von der Kommunikationssteuereinrichtung 31 und der Sende-/Empfangseinrichtung 32 vorgesehen ist. Daher werden die Teilnehmerstation 30 und die Betriebsart-Einstelleinrichtung 35 nicht separat beschrieben. Die nachfolgend beschriebenen Funktionen der Einrichtung 15 sind bei der Einrichtung 35 identisch vorhanden.

Gemäß Fig. 3 hat die Teilnehmerstation 10 zusätzlich zu der Kommunikationssteuereinrichtung 11, der Sende-/Empfangseinrichtung 12 und der Einrichtung 15 zudem einen Mikrocontroller 13, welchem die Kommunikationssteuereinrichtung 11 zugeordnet ist, und eine System-ASIC 16 (ASIC = Anwendungsspezifische Integrierte Schaltung), die alternativ ein System Basis-Chip (SBC) sein kann, auf dem mehrere für eine Elektronik-Baugruppe der Teilnehmerstation 10 notwendige Funktionen zusammengefasst sind. In dem System-ASIC 16 ist zusätzlich zu der Sende-/Empfangseinrichtung 12 eine Energieversorgungseinrichtung 17 eingebaut, welche die Sende-/Empfangseinrichtung 12 mit elektrischer Energie versorgt. Die Energieversorgungseinrichtung 17 liefert üblicherweise eine Spannung CAN_Supply von 5 V. Je nach Bedarf kann die Energieversorgungseinrichtung 17 jedoch eine andere Spannung mit einem anderen Wert liefern. Zusätzlich oder alternativ kann die Energieversorgungseinrichtung 17 als Stromquelle ausgestaltet sein.

Die Sende-/Empfangseinrichtung 12 hat zudem einen Sendeblock 121 und einen Empfangsblock 122. Auch wenn nachfolgend immer von der Sende-/Empfangseinrichtung 12 gesprochen ist, ist es alternativ möglich, den Empfangsblock 122 in einer separaten Einrichtung extern von dem Sendeblock 121 vorzusehen. Der Sendeblock 121 und der Empfangsblock 122 können wie bei einer herkömmlichen Sende-/Empfangseinrichtung 22 aufgebaut sein. Der Sendeblock 121 kann insbesondere mindestens einen Operationsverstärker und/oder einen Transistor aufweisen. Der Empfangsblock 122 kann insbesondere mindestens einen Operationsverstärker und/oder einen Transistor aufweisen.

Die Sende-/Empfangseinrichtung 12 ist an den Bus 40 angeschlossen, genauer gesagt dessen erste Busader 41 für CAN_H oder CAN-XL_H und dessen zweite Busader 42 für CAN_L oder CAN-XL_L. Über mindestens einen Anschluss 43 erfolgt die Spannungsversorgung für die Energieversorgungseinrichtung 17 zum Versorgen der ersten und zweiten Busader 41, 42 mit elektrischer Energie, insbesondere mit der Spannung CAN-Supply. Die Verbindung mit Masse bzw. CAN_GND ist über einen Anschluss 44 realisiert. Die erste und zweite Busader 41, 42 sind mit einem Abschlusswiderstand 49 terminiert.

Die erste und zweite Busader 41, 42 sind in der Sende-/Empfangseinrichtung 12 nicht nur mit dem Sendeblock 121, der auch als Transmitter bezeichnet wird, und mit dem Empfangsblock 122 verbunden, der auch als Receiver bezeichnet wird, auch wenn die Verbindung in Fig. 3 zur Vereinfachung nicht gezeigt ist. Die erste und zweite Busader 41, 42 sind in der Sende-/Empfangseinrichtung 12 auch mit der Einrichtung 15 verbunden.

Im Betrieb des Bussystems 1 kann der Sendeblock 121 im Sendebetrieb der Sende-/Empfangseinrichtung 12 ein Sendesignal TXD oder TxD der Kommunikationssteuereinrichtung 11 mit digitalen Zuständen 0 und 1, wie schematisch in Fig. 3 veranschaulicht, in entsprechende Signale Data_0 und Data_1 für die Busadern 41, 42 umsetzen und diese Signale Data_0 und Data_1 an den Anschlüssen für CAN_H und CAN_L oder CAN-XL_H und CAN-XL_L auf den Bus 40 senden, wie in Fig. 4 gezeigt.

Der Empfangsblock 122 bildet aus von Bus 40 empfangenen Bussignalen auf CAN-XL_H und CAN-XL_L eine Differenz-Spannung VDIFF gemäß Fig. 5 und wandelt diese um in ein Empfangssignal RXD oder RxD mit digitalen Zuständen 0 und 1, wie schematisch in Fig. 3 veranschaulicht, und gibt dieses an die Kommunikationssteuereinrichtung 11 weiter, wie in Fig. 3 gezeigt. Mit Ausnahme des Leerlaufzustands 410, hört die Sende-/Empfangseinrichtung 12 mit dem Empfangsblock 122 im Normalbetrieb immer auf eine Übertragung von Daten bzw. Nachrichten 45, 46 auf dem Bus 40 und zwar unabhängig davon, ob die Sende-/Empfangseinrichtung 12 Sendeblock der Nachricht 45 ist oder nicht.

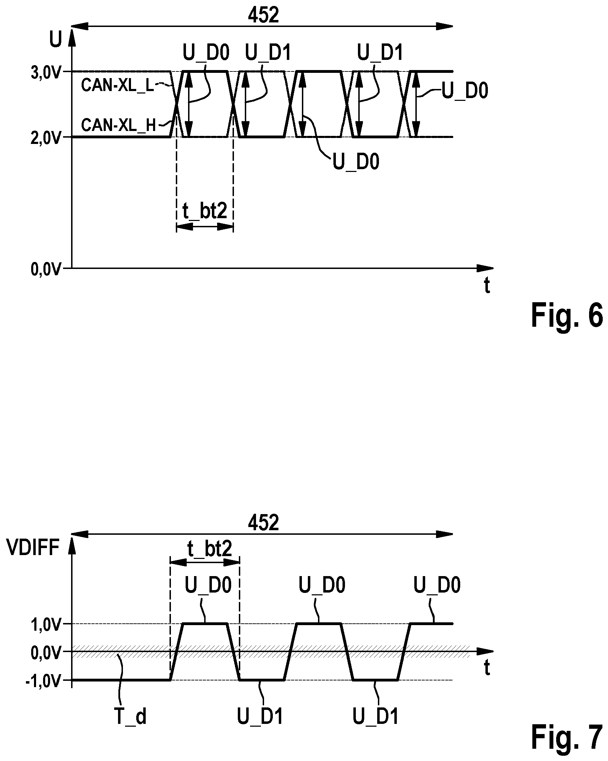

Gemäß Fig. 4 haben die Signale auf CAN-XL_H und CAN-XL_L in den zuvor genannten Kommunikationsphasen 451, 453 die dominanten und rezessiven Buspegel 401, 402, wie von CAN bekannt. Dagegen unterscheiden sich die Signale CAN-XL_H und CAN-XL_L in der Datenphase 452 von den herkömmlichen Signalen auf CAN_H und CAN_L, wie nachfolgend noch genauer anhand von Fig. 6 beschrieben. Auf dem Bus 40 bildet sich aufgrund der Signale CAN-XL_H und CAN-XL_L von Fig. 4 ein Differenzsignal VDIFF = CAN-XL_H - CAN-XL_L aus, das in Fig. 5 gezeigt ist. Die Bits des Differenzsignals VDIFF haben eine Bitzeitdauer t_bt1.

Wie aus Fig. 4 ablesbar, treibt der Sendeblock 121 nur in den zuvor genannten Kommunikationsphasen 451, 453 die dominanten Zustände 402 der differentiellen Signale CAN-XL_H, CAN-XL_L unterschiedlich. Dabei sind die Buspegel auf dem Bus 40 für die rezessiven Zustände 401 in den zuvor genannten Kommunikationsphasen 451, 453 gleich der Hälfte der Spannung Vcc bzw. CAN-Supply von beispielsweise etwa 5V, also 2,5 V. Im rezessiven Zustand 401 wird der Buspegel von dem Sendeblock 121 nicht getrieben, er wird durch den Abschlusswiderstand 49 eingestellt. Die Buspegel auf dem Bus 40 für die dominanten Zustände 402 liegen dagegen bei etwa 1,5 V für das Signal CAN_XL_L und 3, 5 V für das Signal CAN_XL_H. Dementsprechend stellt sich bei dem Beispiel von Fig. 4 und Fig. 5 eine Differenzspannung VDIFF zwischen etwa 0 V und 2 V ein. Somit ergibt sich für eine Spannung VDIFF = CAN-XL_H - CAN-XL_L für die rezessiven Zustände 401 (logische ,1' des Sendesignals TxD) ein Wert von etwa 0 V und für die dominanten Zustände 402 (logische ,0' des Sendesignals TxD) ein Wert von etwa 2,0 V. Den Zustandswechsel zwischen den Zuständen 401, 402 kann der Empfangsblock 122 in den Phasen 451, 453 mit Hilfe einer Empfangsschwelle T_a erkennen, die in Fig. 5 gezeigt ist. Bei dem Beispiel von Fig. 5 ist eine Empfangsschwelle T_a des Empfangsblocks 122 bei etwa 0,7 V eingestellt. In einem üblichen Transceiver-Baustein bzw. einem Baustein einer Sende-/Empfangseinrichtung 12 liegt die Empfangsschwelle je nach Betriebstemperatur, Betriebsspannung und Fertigungstoleranz in einem Toleranzbereich zwischen T_a_min und T_a_max.

Fig. 6 und Fig. 7 zeigen vergleichbare Zeitverläufe zu Fig. 4 und Fig. 5 für die Datenphase 452. Demzufolge treibt der Sendeblock 121 in der Datenphase 452 die Buszustände U_D0, U_D1 der differentiellen Signale CAN-XL_H, CAN-XL_L jeweils unterschiedlich.

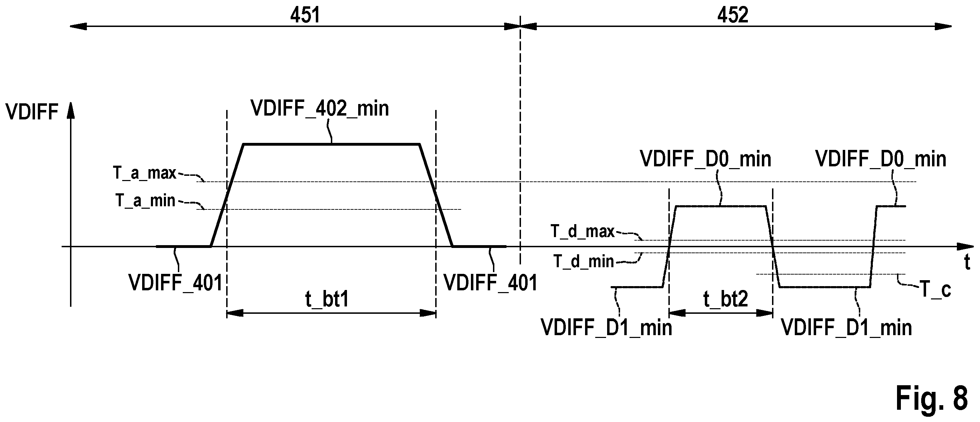

Ganz allgemein gilt gemäß Fig. 8, dass sich in den Kommunikationsphasen 451, 453 bei dem Empfänger des Rahmens 450 eine Differenzspannung VDIFF zwischen maximal 0,05 V = VDIFF_401_max für rezessive Zustände 401 und mindestens 1, 5 V = VDIFF_402_min für dominante Zustände 402 einstellt. Außerdem gilt allgemein gemäß Fig. 8, dass in dem Schaltblock 152 die Empfangsschwelle T_a des Empfangsblocks 122 zwischen einer minimalen Empfangsschwelle T_a_min von 0,5 V und einer maximalen Empfangsschwelle T_a_max von 0,9 V liegt. Der Wert der Empfangsschwelle T_a stellt sich je nach Fertigungstoleranzen sowie den Einfluss von Temperatur und Betriebsspannung ein. Somit gilt, wenn die Differenzspannung VDIFF unter 0,5 V liegt, wie im linken Teil von Fig 8 als Beispiel gezeigt, wird der Buspegel VDIFF_401 sicher als "rezessiv" gelesen. Liegt der Pegel der Differenzspannung VDIFF über 0,9 V, wird der Buspegel sicher als "dominant" gelesen. Liegt der Pegel der Differenzspannung VDIFF zwischen 0,5 V und 0,9 V, kann der Pegel nicht sicher als "rezessiv" oder "dominant" erkannt werden.

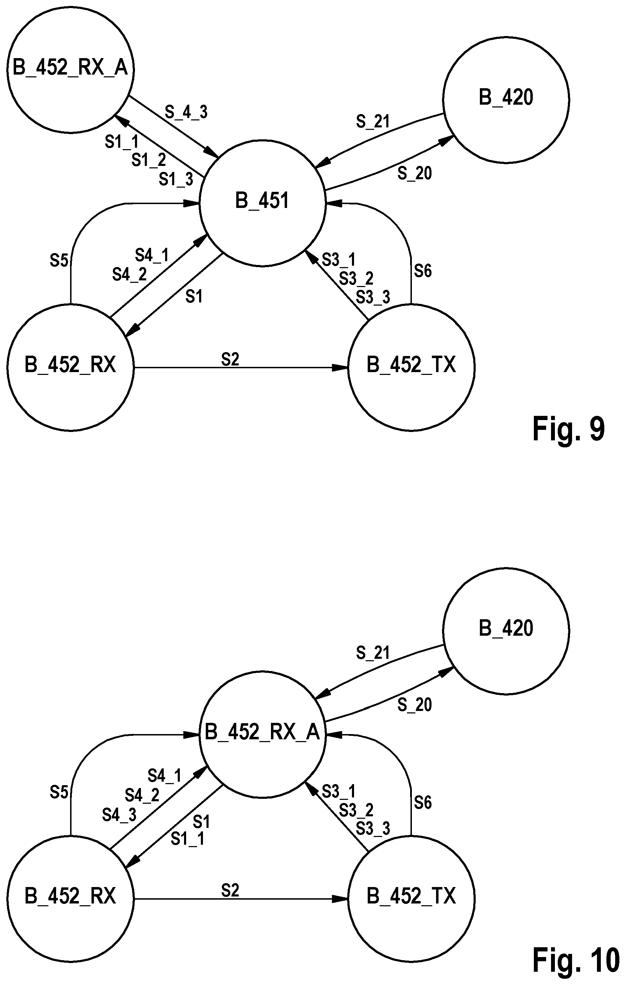

Erkennt die Sende-/Empfangseinrichtung 12, insbesondere deren Einrichtung 15, das Ende der Arbitrationsphase 451, so wird bei den Teilnehmerstationen 10, 20, 30 des Bussystems 1 die Sende-/Empfangseinrichtung 12, 22, 32 in die entsprechende Betriebsart für die Datenphase 452 umgeschaltet, wie später noch anhand von Fig. 9 genauer erläutert.

Fig. 8 zeigt in ihrem rechten Teil die Differenzspannung VDIFF, die sich aus den Signalen Data_0 und Data_1 bildet, die der Sendeblock 121 in der Betriebsart der Datenphase 452 auf den Bus 40 sendet. Die Buspegel auf dem Bus 40 für die Data_0 Zustände liegen bei dem Beispiel von Fig. 6 bis Fig. 8 bei etwa 3 V für das Signal CAN_XL_H und 2 V für das Signal CAN_XL_L. Die Buspegel U_D1 auf dem Bus 40 für die Data_1 Zustände in der Datenphase 452 liegen bei etwa 2 V für das Signal CAN_XL_H und 3 V für das Signal CAN_XL_L. Eine Differenzspannung VDIFF von +/- 1 V wäre auch mit anderen Buspegeln möglich. Jedoch sind die Pegel von 3V und 2V gemäß Fig. 6 symmetrisch zur Mittenspannung von 2.5V bei einer Betriebs-Spannung von 5V. Die Symmetrie ist vorteilhaft für die Reduktion von Abstrahlungen, welche die Qualität der Signale auf dem Bus 40 verschlechtern.

Gemäß dem rechten Teil von Fig. 8 stellen sich in der, optional schnelleren, Datenphase 452 für die Buszustände Data_0, Data_1 die Buszustände U_D0, U_D1 bzw. die Differenzspannungen VDIFF_D0, VDIFF_D1 entsprechend den binären Datenzuständen 0 und 1 des Sendesignals TXD ein. Die von dem Empfänger in der Datenphase 452 erwartete minimale Differenzspannung VDIFF_D0_min für Data_0-Bits liegt bei dem Beispiel von Fig. 6 bis Fig. 8 bei etwa 0,6 V. Die maximale Differenzspannung VDIFF_D1_max für Data_1-Bits liegt bei dem Beispiel von Fig. 6 bis Fig. 8 in der Datenphase 452 bei etwa -0,6 V.

Hierfür treibt der Sendeblock 121 die Zustände der differentiellen Signale CAN-XL_H, CAN-XL_L wieder unterschiedlich, wie in den zuvor genannten Kommunikationsphasen 451, 453. Jedoch sind die beiden Buszustände U_D0, U_D1 bzw. die Differenzspannungen VDIFF_D0, VDIFF_D1 in der Datenphase 452 entsprechend den Datenzuständen 0 und 1 des Sendesignals TXD symmetrisch getrieben. Zudem sind die Buspegel für die Datenzustände Data_0 in den Kommunikationsphasen 451, 453 unterschiedlich von den Datenzuständen Data_0 in der Kommunikationsphase 452. Außerdem sind die Buspegel für die Datenzustände Data_1 in den Kommunikationsphasen 451, 453 unterschiedlich von den Datenzuständen Data_1 in der Kommunikationsphase 452.

Der Empfangsblock 122 verwendet in der Datenphase 452 zusätzlich zu der Empfangsschwelle T_a der Phasen 451, 453 eine Empfangsschwelle T_d, welche nominal bei etwa 0,0 V liegt und daher zwischen dem maximalen Wert von T_d_max = 0,1 V und dem minimalen Wert von T_d_min = -0,1 V liegt. Der Wert der Empfangsschwelle T_d stellt sich je nach Fertigungstoleranzen sowie den Einfluss von Temperatur und Betriebsspannung ein.

Die nominelle Differenzspannung für den rezessiven Datenzustand, VDIFF_401, liegt mit 0V in dem Bereich zwischen T_d_max und T_d_min und kann daher nicht eindeutig erkannt werden, wenn die Empfangsschwelle T_d verwendet wird. Die nominelle Differenzspannung für den rezessiven Datenzustand, VDIFF_401 kann jedoch mit der Empfangsschwelle T_a erkannt werden. Die minimale Differenzspannung für den Datenzustand Data_0, VDIFF_D0_min, liegt unterhalb von T_a_max und kann daher nicht eindeutig erkannt werden, wenn die Empfangsschwelle T_a verwendet wird. Die minimale Differenzspannung für den Datenzustand Data_0, VDIFF_D0_min kann jedoch mit der Empfangsschwelle T_d erkannt werden.

Zudem kann der Empfangsblock 122 in der Datenphase 452 zusätzlich eine Empfangsschwelle T_c verwenden, welche bei etwa -0,4 V liegt. Hierfür stellt die Betriebsart-Einstelleinrichtung 15 die bisher nur eine in den Phasen 451, 453 verwendete Empfangsschwelle T_a und die eine bisher nur in der Phasen 452 verwendete Empfangsschwelle T_d für den Empfangsblock 122 auf die drei Empfangsschwellen T_a, T_d, T_c ein bzw. schaltet abhängig von einer Auswertung der Empfangsschwelle T_c eine der Empfangsschwellen T_a, T_d hinzu, wie in Bezug auf Fig. 9 genauer beschrieben.

Auch wenn der Zahlenwert für die Empfangsschwelle T_c beispielsweise -0,4 V ist, kann der Zahlenwert jedoch je nach aktuell verwendeter CAN-Bus-Topologie optimiert werden.

Der Sendeblock 121 wird somit von einer ersten Betriebsart in den Phasen 451, 453 in eine andere Betriebsart in der Datenphase 452 umgeschaltet, wie in Bezug auf Fig. 9 genauer erläutert. In der ersten Betriebsart haben die Bits eine Bitzeitdauer t_bt1 und es gibt dominante und rezessive Buszustände oder Buspegel. In einer Betriebsart der Datenphase 452 haben die Bits eine Bitzeitdauer t_bt2 und es gibt keine dominanten und rezessiven Buszustände oder Buspegel sondern stattdessen die Buspegel Data_0 und Data_1. Die Bitzeitdauer t_bt2 kann kleiner sein als die Bitzeitdauer t_bt1, wie in Fig. 6 gezeigt. Optional sind die Bitzeitdauer t_bt2, t_bt1 gleich.

Mit anderen Worten erzeugt der Sendeblock 121 in einer ersten Betriebsart gemäß Fig. 4, Fig. 5 und dem linken Teil von Fig. 6 einen ersten Datenzustand, beispielsweise 0, des Sendesignals TxD als Buszustand 402 mit unterschiedlichen Buspegeln für zwei Busleitungen 41, 42 des Busses 40 und einen zweiten Datenzustand, beispielsweise 1, des Sendesignals TxD als Buszustand 401 mit demselben Buspegel für die zwei Busleitungen 41, 42 des Busses 40.

Außerdem treibt der Sendeblock 121, für die zeitlichen Verläufe der Signale CAN-XL_H, CAN-XL_L in einer Betriebsart, welche die Datenphase 452 umfasst, den ersten und zweiten Datenzustand 0, 1 des Sendesignals TxD jeweils zumindest teilweise, so dass sich die Buspegel Data_0, Data_1 des rechten Teils von Fig. 6 für die zwei Busleitungen 41, 42 des Busses 40 ausbilden.

Der Unterschied zwischen dem Physical Layer von CAN in den Kommunikationsphasen 453, 451 und dem zuvor beschriebenen Physical Layer in der Datenphase 452 liegt darin, dass die Zustände Data_1 mit der Differenzspannung VDIFF_D1 in der Datenphase 452 teilweise bis vollständig vom Sendeblock 121 bzw. der Sende-/Empfangseinrichtung 12 getrieben werden. Bei einer Bitrate von beispielsweise 10Mbit/s in der Datenphase 452 beträgt eine Bitzeit t_bt2 = 100ns.

Somit ist, die Bitzeitdauer t_bt2 in der Datenphase 452 bei dem gezeigten Beispiel von Fig. 6 kürzer als die Bitzeitdauer t_bt1, die in der Arbitrationsphase 451 und der Rahmenendphase 453 verwendet wird. Daher wird in der Datenphase 452 mit einer größeren Bitrate gesendet als in der Arbitrationsphase 451 und der Rahmenendphase 453. Auf diese Weise lässt sich die Übertragungsgeschwindigkeit im Bussystem 1 noch weiter steigern als bei CAN FD.

Fig. 9 veranschaulicht in einem Diagramm die Umschaltung des Empfangsblocks 122 zwischen den Kommunikationsphasen 451, 453, in welcher optional eine "langsame Betriebsart" B_451 oder "Slow-Mode" verwendet wird, und der Kommunikationsphase 452, in welcher eine "schnelle Betriebsart" oder "Fast-Mode" verwendet wird, wie nachfolgend genauer erläutert. Zudem kann die Sende-Empfangseinrichtung 12 in eine Konfigurationsbetriebsart B_420 geschaltet werden, wie mit einer Umschaltbedingung S20 an einem Pfeil zwischen der Betriebsart B_451 und der Betriebsart B_420 veranschaulicht.

In der Konfigurationsbetriebsart B_420 kann mindestens eine Einstellung für die Kommunikation vorgenommen werden, wie beispielsweise die Zahlenwerte für die Empfangsschwellen T_a, T_d, T_c eingestellt werden, die Zahlenwerte für Zeitdauern, die bei der Kommunikation in dem Bussystem 1 verwendet werden, eingestellt werden, mindestens ein Identifizierer festgelegt werden, oder sonstige Einstellungen. Die Rückschaltbedingung S21 von der Betriebsart B_420 in die Betriebsart B_451 kann sein, dass das Sendesignal TxD für eine vorbestimmte Zeit t von beispielsweise größer 5µs konstant ist, wie mit einer Rückschaltbedingung S21 an dem Pfeil zwischen den Betriebsarten B_420, B-_451 veranschaulicht. Die Rückschaltbedingung S21 bewirkt, dass die Teilnehmerstation 10 nach der vorbestimmten Zeit t sicher wieder an der Kommunikation im Bussystem 1 teilnehmen kann.

In der Kommunikationsphase 452 gibt es für die Sende-Empfangseinrichtung 12, genauer gesagt ihren Empfangsblock 122, drei verschiedene Betriebsarten, nämlich die Betriebsart B_452_RX, die Betriebsart B_452_TX und die Betriebsart B_452_RX_A. Die Betriebsart ist nur für eine Teilnehmerstation 10, 20, 30 vorgesehen, die nicht weiß, in welcher Phase der CAN-Bus 40 zur Zeit betrieben wird und die sich in die Kommunikation integrieren möchte. Dies ist nachfolgend noch genauer beschrieben.

Für die Erkennung, dass zwischen den Betriebsarten 451, 452_RX, 452_TX, 452_RX_A umzuschalten ist, wie in Fig. 9 veranschaulicht, kann die Betriebsart-Einstelleinrichtung 15, genauer gesagt ihr Auswerteblock 151, verwendet werden. Der Auswerteblock 151 kann als Komparator ausgestaltet sein. Sinnvollerweise wird das Messergebnis des Auswerteblocks 151 tiefpassgefiltert, damit die Umschaltung mittels des Blocks 152 der Betriebsart-Einstelleinrichtung 15 nicht fehlerhaft durch Überschwingungen oder Reflektionen ausgelöst wird.

Der Empfangsschwellenschaltblock 152 ist ausgestaltet, abhängig von dem Auswerteergebnis des Auswerteblocks 151 zu entscheiden, in welche der Betriebsarten 451, 452_RX, 452_TX, 452_RX_A der Empfangsblock 122 zu schalten ist.

Der Empfangsschwellenschaltblock 152 schaltet von der Betriebsart B_451 in die Betriebsart B_452_RX, wenn im Normalbetrieb der Teilnehmerstation 10 das Ende der Arbitrationsphase 451 für einen CAN-XL-Rahmen 450 erkannt wurde, wenn die Teilnehmerstation 10 die Arbitration nicht gewonnen hat. In diesem Fall kann die Sende-Empfangseinrichtung 12 in der anschließenden Datenphase 452 nur als Empfänger agieren. Alternativ agiert die Sende-Empfangseinrichtung 12 in der anschließenden Datenphase 452 in Betriebsart B_452_TX sowohl als Sender als auch Empfänger eines Rahmens 450, wenn die Teilnehmerstation 10 die Arbitration gewonnen hat.

In Folge dessen wird unabhängig davon, ob die Teilnehmerstation 10 die Arbitration verloren oder gewonnen hat, die Sende-/Empfangseinrichtung 12, insbesondere der Empfangsblock 122, von der Betriebsart B_451, in der Signale gemäß Fig. 4 bzw. dem linken Teil von Fig. 6 erzeugt werden, für die Datenphase 452 in die Betriebsart B_452_RX umgeschaltet. Die Teilnehmerstation 10 wechselt also von der Betriebsart B_451 in die Betriebsart B_452_RX, wie mit dem Pfeil S1 in Fig. 9 veranschaulicht. Demzufolge schaltet der Empfangsschwellenschaltblock 152 anstelle der Empfangsschwelle T_a die Empfangsschwelle T_d ein, wie in Bezug auf Fig. 4 bis 6 bereits erwähnt. Hat die Teilnehmerstation 10 die Arbitration verloren, wird auch der Sendeblock 121 deaktiviert oder verriegelt, so dass keine Signale auf den Bus 40 gesendet werden, da die Teilnehmerstation 10 nur als Empfänger des Rahmens 450 agiert.

Hat die Teilnehmerstation 10 die Arbitration nicht verloren sondern gewonnen, wird die Sende-/Empfangseinrichtung 12, insbesondere der Sendeblock 121, von der Betriebsart B_452_RX für die Datenphase 452 weiter in die Betriebsart B_452_TX umgeschaltet. Die Teilnehmerstation 10 wechselt also von der Betriebsart B_452_RX in die Betriebsart B_452_TX, wie mit dem Pfeil S2 in Fig. 9 veranschaulicht. Somit sendet der Sendeblock 121 Signale gemäß dem rechten Teil von Fig. 6 auf den Bus 40. Außerdem empfängt der Empfangsblock 122 die Signale von dem Bus 40, wie in der Betriebsart B_452_RX und wie bereits zuvor erwähnt.

Der Empfangsschwellenschaltblock 152 schaltet von der Betriebsart B_452_TX zurück in die Betriebsart B_451, wenn einer der folgenden drei Fälle vorliegt, wie mit den Rückschaltbedingungen S3_1, S3_2, S3_3 an dem Pfeil zwischen den Betriebsarten B_452_TX, B_451 veranschaulicht.

Die Rückschaltbedingung S3_1 liegt vor, wenn die Teilnehmerstation 10, beispielsweise der Auswerteblock 151, in der Betriebsart B_452_TX erkennt, dass die Datenphase 452 beendet ist.

Die Rückschaltbedingung S3_2 liegt vor, wenn das Empfangssignal RxD eine zu lange Folge von gleichen Bits enthält, also beispielsweise ein Fehlerrahmen 47 empfangen wurde oder fälschlicherweise in den Rahmen 450 kein Stuff-Bit eingefügt wurde.

Die Rückschaltbedingung S3_2 liegt vor, wenn die Sende-/Empfangseinrichtung 12 erkennt, dass mindestens eine andere der Teilnehmerstationen 20, 30 während der Datenphase 452 etwas auf den Bus 40 gesendet hat, so dass kein exklusiver, kollisionsfreier Zugriff auf den Bus 40 mehr besteht und auf dem Bus 40 eine Kollision auftritt.

Zudem schaltet der Empfangsschwellenschaltblock 152 von der Betriebsart B_452_RX zurück in die Betriebsart B_451, wenn einer der folgenden beiden Fälle vorliegt, wie mit den Rückschaltbedingungen S4_1, S4_2 an dem Pfeil zwischen den Betriebsarten B_452_RX, B_451 veranschaulicht.

Die Rückschaltbedingung S4_1 liegt vor, wenn die Teilnehmerstation 10, beispielsweise der Auswerteblock 151, in der Betriebsart B_452_RX erkennt, dass die Datenphase 452 beendet ist.

Die Rückschaltbedingung S4_2 liegt vor, wenn der Sendeblock 121 nach Beendigung der Datenphase 452 wieder etwas auf den Bus 40 sendet, weil die Teilnehmerstation 10 an der nächsten Arbitration teilnehmen will, um selbst einen Rahmen 450 auf den Bus 40 zu senden.

Sicherheitshalber schaltet der Empfangsschwellenschaltblock 152 zudem von der Betriebsart B_452_RX zurück in die Betriebsart B_451, wenn der Sendeblock 121 während der laufenden Datenphase 452 etwas auf den Bus 40 sendet. Dies ist mit einer Rückschaltbedingung S5 an dem Pfeil zwischen den Betriebsarten B_452_RX, B_451 veranschaulicht. In der Regel sendet der Sendeblock 121 in der Betriebsart B_452_RX nur etwas auf den Bus 40, wenn ein Fehler erkannt wurde, so dass der Sendeblock 121 einen Fehlerrahmen 47 auf den Bus 40 sendet. Die Rückschaltbedingung S5 stellt eine Sicherheitsmaßnahme dar, damit die Kommunikation im Bussystem 1 wieder von der ersten Betriebsart B_451 aus sicher gestartet werden kann.

Sicherheitshalber schaltet der Empfangsschwellenschaltblock 152 zudem von der Betriebsart B_452_TX zurück in die Betriebsart B_451, wenn das Sendesignal TxD für eine vorbestimmte Zeit t von beispielsweise größer 5µs konstant ist, wie mit einer Rückschaltbedingung S6 an dem Pfeil zwischen den Betriebsarten B_452_TX, B_451 veranschaulicht. Die Rückschaltbedingung S6 stellt eine Sicherheitsmaßnahme dar, um die Kommunikation im Bussystem 1 robust gegen Fehlerzustände zu machen.

Zudem ist der Empfangsschwellenschaltblock 152 ausgestaltet, von der Betriebsart B_451 in die Betriebsart B_452_RX_A umzuschalten, wenn beispielsweise einer der folgenden drei Einschaltbedingungen S1_1, S1_2, S1_3 vorliegt, wie in Fig. 9 an dem Pfeil zwischen den Betriebsarten B_451, B-_452_RX_A veranschaulicht. Die Betriebsart B_452_RX_A kann auch als "Auto Fast RX"-Modus bezeichnet werden.

Die Einschaltbedingung S1_1 liegt vor, wenn die Teilnehmerstation 10 eingeschaltet wird und sich in eine laufende Buskommunikation integrieren muss.

Die Einschaltbedingung S1_2 liegt vor, wenn die Teilnehmerstation 10 in den Protokollausnahmezustand (Protocol-Exception-State) geschaltet ist.

Die Einschaltbedingung S1_1 liegt vor, wenn eine Teilnehmerstation 10, 30 die Synchronisation zu einer sendenden Teilnehmerstation 10, 30 verloren hat.

In der Betriebsart B_452_RX_A schaltet der Empfangsschwellenschaltblock 152 unter Verwendung der Empfangsschwelle T_c zwischen den Empfangsschwellen T_a der "Slow"-Betriebsart B_451 und der Empfangsschwelle T_d der "Fast RX"-Betriebsart B_452_RX um, wie nachfolgend beschrieben.

In der Betriebsart B_452_RX_A arbeitet die Sende-/Empfangseinrichtung 12 zunächst mit der Empfangsschwelle T_a der "Slow"-Betriebsart B_451 und der Empfangsschwelle T_c. Sobald die Empfangsschwelle T_c unterschritten wird, schaltet die Sende-/Empfangseinrichtung 12, genauer gesagt ihr Block 152, die Empfangsschwelle T_a für eine vorbestimmte Zeitdauer t_A (tAuto_Mode) auf die Empfangsschwelle T_d der "Fast RX"- Betriebsart B_452_RX um. Nach Ablauf der vorbestimmte Zeitdauer t_A schaltet die Sende-/Empfangseinrichtung 12, genauer gesagt ihr Block 152, die Empfangsschwelle T_d zurück zu der Empfangsschwelle T_a der "Slow"-Betriebsart B_451. Die Zeitdauer t_A wird beispielsweise in der Konfigurationsbetriebsart B_420 derart eingestellt, dass die Sende-/Empfangseinrichtung 12 in der vorbestimmten Zeitdauer t_A, in der die Sende-/Empfangseinrichtung 12 mit der Empfangsschwelle T_d der "Fast RX"-Betriebsart B_452_RX arbeitet, mindestens ein Stuff-Bit an die Kommunikationseinrichtung 11 weitergibt. Auf diese Weise wird vermieden, dass der Leerlaufzustand 410 fälschlicherweise während der Datenphase 452 eines CAN XL-Rahmens 450 erkannt wird. Während der Datenphase 452 eines CAN XL-Rahmens 450 kann die Sende-/Empfangseinrichtung 12 mehrfach umschalten, wie zuvor beschrieben.

Der Empfangsschwellenschaltblock 152 schaltet also von der Betriebsart B_452_RX_A zurück in die Betriebsart B_451, wenn die Empfangsschwelle T_c für die vorbestimmte Zeitdauer t_A nicht unterschritten wird, wie mit einer Rückschaltbedingung S4_3 an dem Pfeil zwischen den Betriebsarten B_452_RX_A, B_451 veranschaulicht. Die Rückschaltung findet statt, wenn die Datenphase 452 beendet ist und daher keine Data_1 Pegel mehr auf den Bus 40 getrieben werden.

Die automatische Zurückschaltung zu der Empfangsschwelle T_a der "Slow"-Betriebsart B_451 stellt sicher, dass ein Leerlaufzustand 410 nach der Datenphase 452 sicher erkannt wird.

Nach dem Erkennen des Leerlaufzustands 410 ist die Kommunikationseinrichtung 11 in die Buskommunikation integriert und schaltet die Sende-/Empfangseinrichtung 12 aus dem "Auto Fast RX"-Modus bzw. der Betriebsart B_452_RX_A in den "Slow" Betriebs-Modus bzw. die Betriebsart B_451.

Die Rückschaltbedingung S4_3 stellt eine Maßnahme dar, um der Teilnehmerstation 10 die Integration in die Buskommunikation zu ermöglichen. In der Betriebsart B_452_RX_A kann die Teilnehmerstation 10 mit der Empfangsschwelle T_c vermeiden, fälschlicherweise den Leerlaufzustand 410 zu erkennen, wenn die Teilnehmerstation 10, beispielsweise nach dem Einschalten, noch nicht wissen kann, in welcher Betriebsart B_451, B_452_RX, B_452_TX die anderen Sende-/Empfangseinrichtungen 22, 32 im Bussystem 1 arbeiten.

Dies verhindert, dass die Teilnehmerstation 10, die ihre Sende-/Empfangseinrichtung 12 für die Integration in den "Slow-Modus" bzw. die Betriebsart B_451 schaltet, die Integration zu früh beendet, da die Teilnehmerstation 10 die "Data-0"-Bits eines laufenden CAN XL-Rahmens 450 nicht sicher erkennen kann. Wenn die Teilnehmerstation 10 die Integration zu früh beendet, kann die Teilnehmerstation 10 die Kommunikation stören.

Zudem wird verhindert, dass die Teilnehmerstation 10, die ihre Sende-/Empfangseinrichtung 12 für die Integration in den "Fast-Modus" bzw. die Betriebsart B_452_RX schaltet, die Integration zu spät oder gar nicht beendet, wenn die Teilnehmerstation 10 die rezessiven Bits 401 eines ruhenden CAN-Busses 40 nicht alle erkennen kann. Beendet die Teilnehmerstation 10 die Integration niemals, kann die Teilnehmerstation 10 nicht an der Kommunikation teilnehmen.

Fig. 10 zeigt ein Zustandsdiagramm, das eine Ausgestaltung der Betriebsart-Einstelleinrichtung 15 und des Empfangsblocks 122 bzw. der Sende-/Empfangseinrichtung 12 gemäß einem zweiten Ausführungsbeispiel veranschaulicht. Die Betriebsart-Einstelleinrichtung 15 und der Empfangsblock 122 bzw. die Sende-/Empfangseinrichtung 12 gemäß dem vorliegenden Ausführungsbeispiel sind bis auf die nachfolgend beschriebenen Unterschiede ausgeführt, wie die Betriebsart-Einstelleinrichtung 15 und der Empfangsblock 122 bzw. die Sende-/Empfangseinrichtung 12 gemäß dem vorangehenden Ausführungsbeispiel.

Im Unterschied zu dem vorangehenden Ausführungsbeispiel ersetzt die Betriebsart-Einstelleinrichtung 15 den "Slow"-Modus bzw. die Betriebsart B_451 durch den "Auto Fast RX"-Modus bzw. die Betriebsart B_452_A, wie in Fig. 10 veranschaulicht. Somit verwendet die Teilnehmerstation 10 den "Auto Fast RX"-Modus bzw. die Betriebsart B_452_A nicht nur zur Integration, wie zuvor in Bezug auf Fig. 9 beschrieben, sondern auch während der normalen Kommunikation.

In diesem Fall ist bei dem vorliegenden Ausführungsbeispiel in der Betriebsart-Einstelleinrichtung 15, insbesondere ihrem Empfangsschwellenschaltblock 152, eine zweite vorbestimmte Zeit t_A_10 ((tAuto_Off) spezifiziert, in der die automatische Umschaltung der Empfangsschwellen T_d, T_c abgeschaltet ist. Die automatische Umschaltung ist dann z.B. für die Zeit t_A_10 (tAuto_Off) abgeschaltet, nachdem die Kommunikationssteuereinrichtung 11, genauer gesagt ihr Protokoll-Kontroller, die Betriebsart umgestellt hat oder nachdem der TxD-Eingang der Sende-/Empfangseinrichtung 12 von der Kommunikationssteuereinrichtung 11 auf ,0' gesetzt wurde.

Auf diese Weise kann eine Teilnehmerstation 10, 30, die beispielsweise aufgrund eines Fehlers in der Kopfprüfsumme (Header-CRC-Error) die Länge eines empfangenen CAN XL-Rahmens 450 nicht erkennen kann, auf das Re-Integration-Muster am Ende eines CAN XL-Rahmens 450 warten, ohne vorher fälschlicherweise den Leerlaufzustand 410 zu erkennen.

Dadurch können sich die Teilnehmerstationen 10, 30 nach Fehlern re-integrieren, ohne die klassischen CAN Fehlerrahmen (Error-Flags) 47 zu verwenden. Dies ist sehr vorteilhaft, da dadurch eine laufende Kommunikation nicht gestört und unterbrochen wird. Als Folge davon kann die Nettodatenraten im Bussystem 1 weiter erhöht werden.

Alle zuvor beschriebenen Ausgestaltungen der Einrichtungen 15, 35, der Teilnehmerstationen 10, 20, 30, des Bussystems 1 und des darin ausgeführten Verfahrens können einzeln oder in allen möglichen Kombinationen Verwendung finden. Insbesondere können alle Merkmale der zuvor beschriebenen Ausführungsbeispiele und/oder deren Modifikationen beliebig kombiniert werden. Zusätzlich oder alternativ sind insbesondere folgende Modifikationen denkbar.

Auch wenn die Erfindung zuvor am Beispiel des CAN-Bussystems beschrieben ist, kann die Erfindung bei jedem Kommunikationsnetzwerk und/oder Kommunikationsverfahren eingesetzt werden, bei welchem zwei verschiedene Kommunikationsphasen verwendet werden, in denen sich die Buszustände unterscheiden, die für die unterschiedlichen Kommunikationsphasen erzeugt werden. Insbesondere ist die Erfindung bei Entwicklungen von sonstigen seriellen Kommunikationsnetzwerken, wie Ethernet und/oder 100 Base-T1 Ethernet, Feldbussystemen, usw. einsetzbar.

Insbesondere kann das Bussystem 1 gemäß den Ausführungsbeispielen ein Kommunikationsnetzwerk sein, bei welchem Daten seriell mit zwei verschiedenen Bitraten übertragbar sind. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf einen gemeinsamen Kanal gewährleistet ist.

Die Anzahl und Anordnung der Teilnehmerstationen 10, 20, 30 in dem Bussystem 1 der Ausführungsbeispiele ist beliebig. Insbesondere kann die Teilnehmerstation 20 in dem Bussystem 1 entfallen. Es ist möglich, dass eine oder mehrere der Teilnehmerstationen 10 oder 30 in dem Bussystem 1 vorhanden sind. Denkbar ist, dass alle Teilnehmerstationen in dem Bussystem 1 gleich ausgestaltet sind, also nur Teilnehmerstation 10 oder nur Teilnehmerstation 30 vorhanden sind.

Die Anzahl der Empfangsschwellen T_c, die zu der Empfangsschwelle T_d oder T_a hinzugeschaltet werden, kann auch noch weiter erhöht werden, als zuvor beschrieben. Dadurch kann die Plausibilisierung der Erfassung der derzeitigen Betriebsart der laufenden Kommunikation noch weiter verbessert werden.

Jedoch steigt der Aufwand der Auswertung der Schwellen mit der Anzahl der zugeschalteten Empfangsschwellen T_c.

Alle zuvor beschriebenen Varianten für die Erkennung der Betriebsart können zeitlicher Filterung unterliegen, um die Robustheit in Bezug auf elektromagnetische Verträglichkeit (EMV) und gegenüber elektrostatischer Aufladung (ESD), Pulsen und anderen Störungen zu erhöhen.

## Patentansprüche

1. Einrichtung (12; 32) für ein serielles Bussystem (1), mit
einem Empfangsblock (122) zum Empfang eines Signals (VDIFF) von einem Bus (40) des Bussystems (1), wobei das Signal (VDIFF) auf einem Sendesignal (TxD) basiert, welches digitale Zustände hat, die mit Signalen (Data_0, Data_1) auf den Bus (40) gesendet wurden, und mit welchem eine Nachricht (45) zwischen Teilnehmerstationen (10, 20, 30) des Bussystems (1) ausgetauscht wird, und wobei der Empfangsblock (122) ausgestaltet ist, das von dem Bus (40) empfangene Signal (VDIFF) in einer ersten Kommunikationsphase (451; 453, 451), in der in dem Signal (VDIFF) ein rezessiver Buszustand (401) von einem dominanten Buszustand (402) überschreibbar ist, mit einer ersten Empfangsschwelle (T_a) zu empfangen, und das von dem Bus (40) empfangene Signal (VDIFF) in einer zweiten Kommunikationsphase (452), in der in dem Signal (VDIFF) andere Buszustände als die rezessiven und dominanten Buszustände (401, 402) vorhanden sind, mit einer zweiten Empfangsschwelle (T_d) zu empfangen, wobei die Buszustände (401, 402) des in der ersten Kommunikationsphase (451; 453, 451) von dem Bus (40) empfangenen Signals (VDIFF) mit einem anderen Physical Layer erzeugt sind als die Buszustände (VDIFF_D0, VDIFF_D1) des in der zweiten Kommunikationsphase (452) empfangenen Signals,
einem Auswerteblock (151) zum Auswerten des Signals (VDIFF) von dem Bus (40) des Bussystems (1) mit einer Umschalt-Empfangsschwelle (T_c), die sich von der ersten Empfangsschwelle (T_a) und der zweiten Empfangsschwelle (T_d) unterscheidet, und
einem Empfangsschwellenschaltblock (152) zum zeitlich befristeten Umschalten der Empfangsschwelle des Empfangsblocks (122) von der ersten Empfangsschwelle (T_a) auf die zweite Empfangsschwelle (T_d), wenn der Auswerteblock (151) mit der Umschalt-Empfangsschwelle (T_c) in dem von dem Bus (40) empfangenen Signal (VDIFF) einen vorbestimmten Buspegel (VDIFF_D1) erkennt, mit welchem das Sendesignal (TxD) in der zweiten Kommunikationsphase (452) für das Signal (Data_1) auf den Bus (40) gesendet wird.

2. Einrichtung (12; 32) nach Anspruch 1,
wobei der Empfangsschwellenschaltblock (152) ausgestaltet ist, für das zeitlich befristete Umschalten der Empfangsschwelle des Empfangsblocks (122) von der ersten Empfangsschwelle (T_a) auf die zweite Empfangsschwelle (T_d) den Empfangsblock (122) in eine Betriebsart (B_452_RX_A) zu schalten, die sich von drei anderen Betriebsarten der Einrichtung (12; 32) unterscheidet,
wobei die drei anderen Betriebsarten der Einrichtung (12; 32) aufweisen
eine erste Betriebsart (B_451) zum Senden und/oder Empfangen des Signals (VDIFF) in der ersten Kommunikationsphase (451; 453, 451),
eine zweite Betriebsart (B_452_RX) nur zum Empfangen des Signals (VDIFF) in der zweiten Kommunikationsphase (452), und
eine dritte Betriebsart (B_452_RX) zum Senden und Empfangen des Signals (VDIFF) in der zweiten Kommunikationsphase (452).

3. Einrichtung (12; 32) nach Anspruch 1, wobei der Empfangsschwellenschaltblock (152) ausgestaltet ist, das zeitlich befristete Umschalten der Empfangsschwelle des Empfangsblocks (122) von der ersten Empfangsschwelle (T_a) auf die zweite Empfangsschwelle (T_d) in einer ersten Betriebsart (B_451) vorzunehmen, in der das Empfangen des Signals (VDIFF) in der ersten Kommunikationsphase (451; 453, 451) durchgeführt wird.

4. Einrichtung (12; 32) nach einem der vorangehenden Ansprüche, wobei der Auswerteblock (151) ein Komparator ist, der einen Eingang zum Anschluss an zwei Busleitungen (41, 42) des Busses (40) aufweist, und dessen Ausgang an den Empfangsschwellenschaltblock (152) angeschlossen ist.

5. Einrichtung (12; 32) nach einem der vorangehenden Ansprüche, wobei der Auswerteblock (151) ausgestaltet ist zu prüfen, ob die Umschalt-Empfangsschwelle (T_c) von einem Buspegel für Data_1 des Sendesignals (TxD) in dem Signal (VDIFF) unterschritten wird.

6. Einrichtung (12; 32) nach Anspruch 5, wobei die Umschalt-Empfangsschwelle (T_c) eine Empfangsschwelle mit einem negativen Zahlenwert ist.

7. Einrichtung (12; 16; 32) nach einem der vorangehenden Ansprüche, wobei die Buszustände (401, 402) des in der ersten Kommunikationsphase (451; 453, 451) von dem Bus (40) empfangenen Signals eine längere Bitzeit (t_bt1) haben als die Buszustände (VDIFF_D0, VDIFF_D1) des in der zweiten Kommunikationsphase (452) empfangenen Signals.

8. Einrichtung (12; 32) nach einem der vorangehenden Ansprüche, wobei in der ersten Kommunikationsphase (451; 453, 451) ausgehandelt wird, welche der Teilnehmerstationen (10, 20, 30) des Bussystems (1) in der nachfolgenden zweiten Kommunikationsphase (452) einen zumindest zeitweise exklusiven, kollisionsfreien Zugriff auf den Bus (40) bekommt.

9. Einrichtung (12; 32) nach einem der vorangehenden Ansprüche,
zudem mit einem Sendeblock (121) zum Senden von Nachrichten (45) auf einen Bus (40) des Bussystems (1),
wobei der Sendeblock (121) beim Senden der verschiedenen Kommunikationsphasen (451 bis 453) einer Nachricht (45; 46) ausgestaltet ist, zwischen einer Sendebetriebsart (B_451) für die erste Kommunikationsphase (451; 453, 451) und einer Sendebetriebsart (B_451_TX) für die zweite Kommunikationsphase (452) zu schalten.

10. Teilnehmerstation (10; 30) für ein serielles Bussystem (1), mit
einer Kommunikationssteuereinrichtung (11; 31) zum Steuern einer Kommunikation der Teilnehmerstation (10; 30) mit mindestens einer anderen Teilnehmerstation (10; 20; 30) des Bussystems (1), und
einer Einrichtung (12; 32) nach einem der vorangehenden Ansprüche.

11. Teilnehmerstation (10; 30) nach Anspruch 10, wobei die Kommunikationssteuereinrichtung (11; 31) ausgestaltet ist, die Einrichtung (12; 32) in eine Betriebsart (B_451) zum Senden und/oder Empfangen des Signals (VDIFF) in der ersten Kommunikationsphase (451; 453, 451) zu schalten, wenn die Kommunikationssteuereinrichtung (11; 31) einen Leerlaufzustand (410) auf dem Bus erkannt hat.

12. Bussystem (1), mit
einem Bus (40), und
mindestens zwei Teilnehmerstationen (10; 20; 30), welche über den Bus (40) derart miteinander verbunden sind, dass sie seriell miteinander kommunizieren können und von denen mindestens eine Teilnehmerstation (10; 30) eine Teilnehmerstation (10; 30) nach Anspruch 10 oder 11 ist.

13. Verfahren zur Kommunikation in einem seriellen Bussystem (1), wobei das Verfahren mit einer Einrichtung (12; 32) ausgeführt wird, die einen Empfangsblock (122) zum Empfang eines Signals (VDIFF) von einem Bus (40) des Bussystems (1), einen Auswerteblock (151) und einen Empfangsschwellenschaltblock (152) aufweist, und wobei die Einrichtung (12; 32) die Schritte ausführt,
Empfangen, mit dem Empfangsblock (122) eines Signals (VDIFF) von einem Bus (40) des Bussystems (1), wobei das Signal (VDIFF) auf einem Sendesignal (TxD) basiert, welches digitale Zustände hat, die mit Signalen (Data_0, Data_1) auf den Bus (40) gesendet wurden, und mit welchem eine Nachricht (45) zwischen Teilnehmerstationen (10, 20, 30) des Bussystems (1) ausgetauscht wird, wobei der Empfangsblock (122) ausgestaltet ist, das von dem Bus (40) empfangene Signal (VDIFF) in einer ersten Kommunikationsphase (451; 453, 451), in der in dem Signal (VDIFF) ein rezessiver Buszustand (401) von einem dominanten Buszustand (402) überschreibbar ist, mit einer ersten Empfangsschwelle (T_a) zu empfangen, und das von dem Bus (40) empfangene Signal (VDIFF) in einer zweiten Kommunikationsphase (452), in der in dem Signal (VDIFF) andere Buszustände als die rezessiven und dominanten Buszustände (401, 402) vorhanden sind, mit einer zweiten Empfangsschwelle (T_d) zu empfangen, wobei die Buszustände (401, 402) des in der ersten Kommunikationsphase (451; 453, 451) von dem Bus (40) empfangenen Signals (VDIFF) mit einem anderen Physical Layer erzeugt sind als die Buszustände (VDIFF_D0, VDIFF_D1) des in der zweiten Kommunikationsphase (452) empfangenen Signals, Auswerten, mit dem Auswerteblock (151), des Signals (VDIFF) von dem Bus (40) des Bussystems (1) mit einer Umschalt-Empfangsschwelle (T_c), die sich von der ersten Empfangsschwelle (T_a) und der zweiten Empfangsschwelle (T_d) unterscheidet, und
Befristetes Umschalten, mit dem Empfangsschwellenschaltblock (152), der Empfangsschwelle des Empfangsblocks (122) von der ersten Empfangsschwelle (T_a) auf die zweite Empfangsschwelle (T_d), wenn der Auswerteblock (151) mit der Umschalt-Empfangsschwelle (T_c) in dem von dem Bus (40) empfangenen Signal (VDIFF) einen Buspegel (VDIFF_1) erkennt, mit welchem das Sendesignal (TxD) in der zweiten Kommunikationsphase (452) für das Signal (Data_1) auf den Bus (40) gesendet wird.

## Claims

1. Device (12; 32) for a serial bus system (1), having
a reception block (122) for receiving a signal (VDIFF) from a bus (40) of the bus system (1), wherein the signal (VDIFF) is based on a transmission signal (TxD), which has digital states that were sent with signals (Data_0, Data_1) onto the bus (40), and with which a message (45) is exchanged between subscriber stations (10, 20, 30) of the bus system (1), and wherein the reception block (122) is configured to receive the signal (VDIFF) received from the bus (40) in a first communication phase (451; 453, 451), in which a recessive bus state (401) can be overwritten by a dominant bus state (402) in the signal (VDIFF), with a first reception threshold (T_a), and to receive the signal (VDIFF) received from the bus (40) in a second communication phase (452), in which bus states other than the recessive and dominant bus states (401, 402) are present in the signal (VDIFF), with a second reception threshold (T_d), wherein the bus states (401, 402) of the signal (VDIFF) received from the bus (40) in the first communication phase (451; 453, 451) are generated using a different physical layer than the bus states (VDIFF_D0, VDIFF_D1) of the signal received in the second communication phase (452),
an evaluation block (151) for evaluating the signal (VDIFF) from the bus (40) of the bus system (1) with a switching reception threshold (T_c) which differs from the first reception threshold (T_a) and the second reception threshold (T_d), and
a reception threshold switching block (152) for switching the reception threshold of the reception block (122) from the first reception threshold (T_a) to the second reception threshold (T_d) for a limited time if the evaluation block (151) detects, with the switching reception threshold (T_c), a predetermined bus level (VDIFF_D1) in the signal (VDIFF) received from the bus (40), with which the transmission signal (TxD) is sent onto the bus (40) in the second communication phase (452) for the signal (Data_1).

2. Device (12; 32) according to Claim 1,
wherein the reception threshold switching block (152) is configured to switch the reception block (122) to an operating mode (B_452_RX_A), which differs from three other operating modes of the device (12; 32), for switching the reception threshold of the reception block (122) from the first reception threshold (T_a) to the second reception threshold (T_d) for a limited time,
wherein the three other operating modes of the device (12; 32) include
a first operating mode (B_451) for sending and/or receiving the signal (VDIFF) in the first communication phase (451; 453, 451),
a second operating mode (B_452_RX) only for receiving the signal (VDIFF) in the second communication phase (452), and
a third operating mode (B_452_RX) for sending and receiving the signal (VDIFF) in the second communication phase (452).

3. Device (12; 32) according to Claim 1, wherein the reception threshold switching block (152) is configured to switch the reception threshold of the reception block (122) from the first reception threshold (T_a) to the second reception threshold (T_d) for a limited time in a first operating mode (B_451) in which the signal (VDIFF) is received in the first communication phase (451; 453, 451).

4. Device (12; 32) according to one of the preceding claims, wherein the evaluation block (151) is a comparator, which has an input for connection to two bus lines (41, 42) of the bus (40), and whose output is connected to the reception threshold switching block (152).

5. Device (12; 32) according to one of the preceding claims, wherein the evaluation block (151) is configured to check whether the switching reception threshold (T_c) is undershot by a bus level for Data_1 of the transmission signal (TxD) in the signal (VDIFF).

6. Device (12; 32) according to Claim 5, wherein the switching reception threshold (T_c) is a reception threshold with a negative numerical value.

7. Device (12; 16; 32) according to one of the preceding claims, wherein the bus states (401, 402) of the signal received from the bus (40) in the first communication phase (451; 453, 451) have a longer bit time (t_bt1) than the bus states (VDIFF_D0, VDIFF_D1) of the signal received in the second communication phase (452).

8. Device (12; 32) according to one of the preceding claims, wherein the first communication phase (451; 453, 451) comprises negotiating which of the subscriber stations (10, 20, 30) of the bus system (1) receives at least temporarily exclusive, collision-free access to the bus (40) in the subsequent, second communication phase (452).

9. Device (12; 32) according to one of the preceding claims,
also having a transmission block (121) for sending messages (45) onto a bus (40) of the bus system (1),
wherein the transmission block (121) is configured, when sending the various communication phases (451 to 453) of a message (45; 46), to switch between a transmission operating mode (B_451) for the first communication phase (451; 453, 451) and a transmission operating mode (B_451_TX) for the second communication phase (452).

10. Subscriber station (10; 30) for a serial bus system (1), having
a communication control device (11; 31) for controlling communication between the subscriber station (10; 30) and at least one other subscriber station (10; 20; 30) of the bus system (1), and
a device (12; 32) according to one of the preceding claims.

11. Subscriber station (10; 30) according to Claim 10, wherein the communication control device (11; 31) is configured to switch the device (12; 32) to an operating mode (B_451) for sending and/or receiving the signal (VDIFF) in the first communication phase (451; 453, 451) if the communication control device (11; 31) has detected an idle state (410) on the bus.

12. Bus system (1) having
a bus (40), and
at least two subscriber stations (10; 20; 30) connected to one another via the bus (40) in such a manner that they can communicate serially with one another and at least one subscriber station (10; 30) of which is a subscriber station (10; 30) according to Claim 10 or 11.

13. Method for communicating in a serial bus system (1), wherein the method is carried out with a device (12; 32) comprising a reception block (122) for receiving a signal (VDIFF) from a bus (40) of the bus system (1), an evaluation block (151) and a reception threshold switching block (152), and wherein the device (12; 32) performs the steps of
using the reception block (122) to receive a signal (VDIFF) from a bus (40) of the bus system (1), wherein the signal (VDIFF) is based on a transmission signal (TxD), which has digital states that were sent with signals (Data_0, Data_1) onto the bus (40), and with which a message (45) is exchanged between subscriber stations (10, 20, 30) of the bus system (1), wherein the reception block (122) is configured to receive the signal (VDIFF) received from the bus (40) in a first communication phase (451; 453, 451), in which a recessive bus state (401) can be overwritten by a dominant bus state (402) in the signal (VDIFF), with a first reception threshold (T_a), and to receive the signal (VDIFF) received from the bus (40) in a second communication phase (452), in which bus states other than the recessive and dominant bus states (401, 402) are present in the signal (VDIFF), with a second reception threshold (T_d), wherein the bus states (401, 402) of the signal (VDIFF) received from the bus (40) in the first communication phase (451; 453, 451) are generated using a different physical layer than the bus states (VDIFF_D0, VDIFF_D1) of the signal received in the second communication phase (452), using the evaluation block (151) to evaluate the signal (VDIFF) from the bus (40) of the bus system (1) with a switching reception threshold (T_c) which differs from the first reception threshold (T_a) and the second reception threshold (T_d), and
using the reception threshold switching block (152) to switch the reception threshold of the reception block (122) from the first reception threshold (T_a) to the second reception threshold (T_d) for a limited time if the evaluation block (151) detects, with the switching reception threshold (T_c), a bus level (VDIFF_1) in the signal (VDIFF) received from the bus (40), with which the transmission signal (TxD) is sent onto the bus (40) in the second communication phase (452) for the signal (Data_1).

## Revendications

1. Dispositif (12 ; 32) pour un système de bus série (1), comprenant
un bloc de réception (122) pour recevoir un signal (VDIFF) d'un bus (40) du système de bus (1), le signal (VDIFF) étant basé sur un signal d'émission (TxD) qui a des états numériques qui ont été envoyés avec des signaux (Data_0, Data_1) sur le bus (40), et avec lequel un message (45) est échangé entre des stations d'abonné (10, 20, 30) du système de bus (1), et le bloc de réception (122) étant conçu pour recevoir le signal (VDIFF) reçu par le bus (40) dans une première phase de communication (451 ; 453, 451), dans laquelle, dans le signal (VDIFF), un état de bus récessif (401) peut être écrasé par un état de bus dominant (402), avec un premier seuil de réception (T_a), et pour recevoir le signal (VDIFF) reçu par le bus (40) dans une deuxième phase de communication (452), dans laquelle des états de bus autres que les états de bus récessifs et dominants (401, 402) sont présents dans le signal (VDIFF), avec un deuxième seuil de réception (T_d), les états de bus (401, 402) du signal reçu (VDIFF) par le bus (40) dans la première phase de communication (451 ; 453, 451) étant générés avec une couche physique différente de celle des états de bus (VDIFF_D0, VDIFF_D1) du signal reçu dans la deuxième phase de communication (452),
un bloc d'évaluation (151) pour évaluer le signal (VDIFF) provenant du bus (40) du système de bus (1) avec un seuil de réception de commutation (T_c) qui est différent du premier seuil de réception (T_a) et du deuxième seuil de réception (T_d), et
un bloc de commutation de seuil de réception (152) pour commuter temporairement le seuil de réception du bloc de réception (122) du premier seuil de réception (T_a) au deuxième seuil de réception (T_d), lorsque le bloc d'évaluation (151) détecte avec le seuil de réception de commutation (T_c) dans le signal (VDIFF) reçu par le bus (40) un niveau de bus prédéterminé (VDIFF_D1) avec lequel le signal d'émission (TxD) est envoyé sur le bus (40) dans la deuxième phase de communication (452) pour le signal (Data_1).

2. Dispositif (12 ; 32) selon la revendication 1,
dans lequel le bloc de commutation de seuil de réception (152) est conçu, pour la commutation temporaire du seuil de réception du bloc de réception (122) du premier seuil de réception (T_a) au deuxième seuil de réception (T_d), pour commuter le bloc de réception (122) dans un mode de fonctionnement (B_452_RX_A) qui se distingue de trois autres modes de fonctionnement du dispositif (12 ; 32),
les trois autres modes de fonctionnement du dispositif (12 ; 32) présentant
un premier mode de fonctionnement (B_451) pour émettre et/ou recevoir le signal (VDIFF) dans la première phase de communication (451 ; 453, 451),
un deuxième mode de fonctionnement (B_452_RX) uniquement pour recevoir le signal (VDIFF) dans la deuxième phase de communication (452), et
un troisième mode de fonctionnement (B_452_RX) pour émettre et recevoir le signal (VDIFF) dans la deuxième phase de communication (452),

3. Dispositif (12 ; 32) selon la revendication 1, dans lequel le bloc de commutation de seuil de réception (152) est conçu pour effectuer la commutation temporaire du seuil de réception du bloc de réception (122) du premier seuil de réception (T_a) au deuxième seuil de réception (T_d) dans un premier mode de fonctionnement (B_451) dans lequel la réception du signal (VDIFF) est effectuée dans la première phase de communication (451 ; 453, 451).

4. Dispositif (12 ; 32) selon l'une quelconque des revendications précédentes, dans lequel le bloc d'évaluation (151) est un comparateur présentant une entrée destinée à être raccordée à deux lignes de bus (41, 42) du bus (40), et dont la sortie est raccordée au bloc de commutation de seuil de réception (152).

5. Dispositif (12 ; 32) selon l'une quelconque des revendications précédentes, dans lequel le bloc d'évaluation (151) est conçu pour vérifier si le seuil de réception de commutation (T_c) d'un niveau de bus pour Data_1 du signal d'émission (TxD) n'est pas atteint dans le signal (VDIFF).

6. Dispositif (12 ; 32) selon la revendication 5, dans lequel le seuil de réception de commutation (T_c) est un seuil de réception ayant une valeur numérique négative.

7. Dispositif (12 ; 16 ; 32) selon l'une quelconque des revendications précédentes, dans lequel les états de bus (401, 402) du signal reçu du bus (40) dans la première phase de communication (451 ; 453, 451) ont un temps de bit (t_bt1) plus long que les états de bus (VDIFF_D0, VDIFF_D1) du signal reçu dans la deuxième phase de communication (452).

8. Dispositif (12 ; 32) selon l'une quelconque des revendications précédentes, dans lequel dans la première phase de communication (451 ; 453, 451), on négocie laquelle des stations d'abonné (10, 20, 30) du système de bus (1) obtiendra dans la deuxième phase de communication (452) consécutive un accès au bus (40) au moins temporairement exclusif, sans collision.

9. Dispositif (12 ; 32) selon l'une quelconque des revendications précédentes,
comprenant en outre bloc d'émission (121) pour émettre des messages (45) sur un bus (40) du système de bus (1).
le bloc d'émission (121) étant conçu, lors de l'émission des différentes phases de communication (451 à 453) d'un message (45 ; 46), pour commuter entre un mode d'émission (B_451) pour la première phase de communication (451 ; 453, 451) et un mode d'émission (B_451_TX) pour la deuxième phase de communication (452).

10. Station d'abonné (10 ; 30) pour un système de bus série (1), comprenant
un dispositif de commande de communication (11 ; 31) destiné à commander une communication de la station d'abonné (10 ; 30) avec au moins une autre station d'abonné (10 ; 20 ; 30) du système de bus (1), et
un dispositif (12 ; 32) selon l'une quelconque des revendications précédentes.

11. Station d'abonné (10 ; 30) selon la revendication 10, dans laquelle le dispositif de commande de communication (11 ; 31) est conçu pour commuter le dispositif (12 ; 32) dans un mode de fonctionnement (B_451) pour émettre et/ou recevoir le signal (VDIFF) dans la première phase de communication (451 ; 453, 451) lorsque le dispositif de commande de communication (11 ; 31) a détecté un état d'inactivité (410) sur le bus.

12. Système de bus (1), comprenant
un bus (40), et
au moins deux stations d'abonné (10 ; 20 ; 30) qui sont reliées l'une à l'autre par le biais du bus (40), de telle sorte qu'elles peuvent communiquer en série entre elles, et parmi lesquelles au moins une station d'abonné (10 ; 30) est une station d'abonné (10 ; 30) selon la revendication 10 ou 11.

13. Procédé de communication dans un système de bus série (1), le procédé étant mis en œuvre avec un dispositif (12 ; 32) présentant un bloc de réception (122) pour recevoir un signal (VDIFF) d'un bus (40) du système de bus (1), un bloc d'évaluation (151) et un bloc de commutation de seuil de réception (152), et le dispositif (12 ; 32) exécutant les étapes suivantes,
la réception, avec le bloc de réception (122) d'un signal (VDIFF) d'un bus (40) du système de bus (1), le signal (VDIFF) étant basé sur un signal d'émission (TxD) qui a des états numériques qui ont été envoyés avec des signaux (Data_0, Data_1) sur le bus (40), et avec lequel un message (45) est échangé entre des stations d'abonné (10, 20, 30) du système de bus (1), le bloc de réception (122) étant conçu pour recevoir le signal (VDIFF) reçu par le bus (40) dans une première phase de communication (451 ; 453, 451), dans laquelle, dans le signal (VDIFF), un état de bus récessif (401) peut être écrasé par un état de bus dominant (402), avec un premier seuil de réception (T_a), et pour recevoir le signal (VDIFF) reçu par le bus (40) dans une deuxième phase de communication (452), dans laquelle des états de bus autres que les états de bus récessifs et dominants (401, 402) sont présents dans le signal (VDIFF), avec un deuxième seuil de réception (T_d), les états de bus (401, 402) du signal reçu (VDIFF) par le bus (40) dans la première phase de communication (451 ; 453, 451) étant générés avec une couche physique différente de celle des états de bus (VDIFF_D0, VDIFF_D1) du signal reçu dans la deuxième phase de communication (452), l'évaluation, avec le bloc d'évaluation (151), le signal (VDIFF) provenant du bus (40) du système de bus (1) avec un seuil de réception de commutation (T_c) qui est différent du premier seuil de réception (T_a) et du deuxième seuil de réception (T_d), et
la commutation temporaire, avec le bloc de commutation de seuil de réception (152), du seuil de réception du bloc de réception (122) du premier seuil de réception (T_a) au deuxième seuil de réception (T_d), lorsque le bloc d'évaluation (151) détecte avec le seuil de réception de commutation (T_c) dans le signal (VDIFF) reçu par le bus (40) un niveau de bus (VDIFF_1) avec lequel le signal d'émission (TxD) est envoyé sur le bus (40) dans la deuxième phase de communication (452) pour le signal (Data_1).
